# EUROPÄISCHE PATENTSCHRIFT

(11) **EP 1 899 280 B1**
(45) Veröffentlichungstag und Bekanntmachung des Hinweises auf die Patenterteilung: **02.09.2015**
(21) Anmeldenummer: 06776131.2
(22) Anmeldetag: 05.07.2006
(51) Int. Cl.: C04B 35/573, C04B 38/00, F01N 3/022, B01D 53/94, B01D 46/24, C04B 41/87

(54) **PORÖSER ß-SIC-HALTIGER KERAMISCHER FORMKÖRPER MIT EINER ALUMINIUMOXIDBESCHICHTUNG UND VERFAHREN ZU DESSEN HERSTELLUNG**
POROUS ß-SIC-CONTAINING CERAMIC MOLDED ARTICLE COMPRISING AN ALUMINUM OXIDE COATING, AND METHOD FOR THE PRODUCTION THEREOF
CORPS MOULE CERAMIQUE CONTENANT DU ß-SIC POREUX ET PRESENTANT UN REVETEMENT EN OXYDE D'ALUMINIUM ET PROCEDE POUR LE PRODUIRE

(30) Priorität: 05.07.2005 EP 05014531; 05.07.2005 EP 05014530
(43) Veröffentlichungstag der Anmeldung: 19.03.2008
(73) Patentinhaber: MANN+HUMMEL Innenraumfilter GmbH & Co. KG, 95482 Gefrees (DE)
(72) Erfinder: GALSTERER, Daniel, 91058 Erlangen (DE); GREIL, Peter, 91085 Weisendorf (DE); WOLFF, Thomas, 95213 Münchberg (DE); WEISENSEL, Lars, 63867 Johannesberg (DE); TRAVITZKY, Nahum, 90409 Nürnberg (DE); SIEBER, Heino, 85051 Ingolstadt (DE)
(74) Vertreter: Louis Pöhlau Lohrentz
(86) Internationale Anmeldenummer: PCT/EP2006/006559
(87) Internationale Veröffentlichungsnummer: WO 2007/003428

(56) Entgegenhaltungen:
- EP-A- 1 338 322
- EP-A- 1 666 146
- WO-A-00/01463
- WO-A-2005/049524
- US-A1- 2005 084 717

## Beschreibung

Die Erfindung betrifft einen porösen β-SiC-haltigen keramischen Formkörper mit einer Aluminiumoxidschicht an der Oberfläche und ein Verfahren zu dessen Herstellung.

SiC-basierende Materialien werden für eine Vielzahl von unterschiedlichen Anwendungen, insbesondere dort wo hohe Stabilität bei hohen Temperaturen oder hohe Korrosionsbeständigkeiten gefordert werden, eingesetzt. Hochporöse, und damit auch leicht gewichtige, SiC-basierende Keramiken werden im zunehmenden Maße als Katalysatorträger, Brennhilfsmittel, Isolationsmaterialien, Substratmaterialien oder zur Gaserhitzung in Porenbrennern oder für Solaranlagen sowie zur Abgasreinigung bei hohen Temperaturen als Filtermaterialien benötigt.

SiC-Materialien auf SiC-Basis werden entweder auf der Basis von SiC-Pulvern (US 6,582,796) oder aus einer Mischung von Kohlenstoff-haltigen oder Siliziumhaltigen Materialien hergestellt. Beispielsweise wird eine Kohlenstoff-haltige Verbindung zu einem Formkörper geformt, anschließend pyrolysiert und durch Schmelzinfiltration mit flüssigem Silizium zu einem SiC-Körper umgesetzt (US 2003/0180538). Alternativ kann auch ein Kohlenstoff-haltiges-Pulver und ein Silizium-haltiges Pulver zu einem Formkörper geformt und anschließend zu SiC umgesetzt werden (US 4,481,179).

Bei der Extrusion unterliegen jedoch die Extrusionsmundstücke einem hohen Verschleiß. Ferner ist die Herstellung von stabilen Formkörpern, welche eine Kanalstruktur, insbesondere eine hohen Kanaldichte und eine geringe Wandstärke aufweisen, in einer ausreichenden Qualität nicht möglich. Derartige Strukturen werden jedoch insbesondere in der Katalysatortechnik und Filtertechnik benötigt. Siliciumcarbid weist ein sehr schlechtes Haftvermögen für Katalysatoren auf. Folglich ist es erstrebenswert, nicht nur die Stabilität des Formkörpers zu verbessern, sondern insbesondere auch dessen Haftungseigenschaften, insbesondere für Katalysatoren bzw. Katalysatormaterialien.

Die EP 1 338 322 A1 offenbart eine Filtervorrichtung zur Reinigung von Abgas, wobei eine Katalysatorschicht auf Partikeln eines keramischen Trägermaterials mit einer Porengröße von 10 bis 250 µm und einer Porosität von 40 bis 80% ausgebildet ist.

Die WO 00/01463 offenbart eine Filtervorrichtung für einen Dieselmotor, die ein Gehäuse, einen porösen Filterformkörper, eine auf der Auslassseite des Filterkörpers aufgebrachte Membran und eine katalytisch aktive Beschichtung umfasst.

Die EP 1 666 146 A1 offenbart einen auf Siliziumkarbid basierenden Katalysatorkörper, der eine poröse Honigwabenstruktur aufweist, wobei Siliziumkarbidpartikel aneinander aggregiert vorliegen und Poren aufweisen und wobei auf der Oberfläche der porösen Honigwabenstruktur ein Aluminiumoxid und Ceroxid enthaltender Katalysator aufgebracht ist.

Die WO 2005/049524 A1 offenbart eine karbidische und oxidische Keramik, die ein Innenskelett aus Metallkarbid und eine äußere Schicht aus Oxidkeramik aufweist

Aufgabe der Erfindung ist es, ein verbessertes Verfahren zur Herstellung von porösen Keramiken auf SiC-Basis bereitzustellen, bei dem der Formkörper leichter extrudiert werden kann, der Verschleiß und Abrieb an den Formwerkzeugen verringert wird und/oder der Energieaufwand gering ist.

Eine weitere Aufgabe ist es, ein Verfahren zur Herstellung von porösen Keramiken auf SiC-Basis bereitzustellen, das die Extrusion von sehr feinen Kanalstrukturen mit einer hohen Kanaldichte und einer geringen Kanalwandstärke ermöglicht.

Eine weitere Aufgabe ist es, einen porösen keramischen Formkörper auf SiC-Basis mit definierbarer Porenstruktur und ausreichender Porosität und Feinzelligkeit (Kanaldichte) bereitzustellen, der vorzugsweise als Katalysatorträger und/oder Filter geeignet ist und/oder weiter vorzugsweise eine hervorragende Temperaturbeständigkeit, chemische und mechanische Beständigkeit aufweist.

Eine weitere Aufgabe ist es, einen mechanisch stabilen porösen keramischen Formkörper auf SiC-Basis bereitzustellen, der sehr feine Kanalstrukturen mit einer hohen Kanaldichte aufweist und vorzugsweise durch Extrusion herstellbar ist.

Eine weitere Aufgabe ist es, einen porösen keramischen Formkörper auf SiC-Basis bereitzustellen, dessen Oberfläche verbesserte Hafteigenschaften, insbesondere für Katalysatoren bzw. Katalysatorenmaterialien, aufweist.

Die der Erfindung zugrunde liegende Aufgabe wird durch Bereitstellen eines Verfahrens zur Herstellung eines porösen β-SiC-haltigen keramischen Formkörpers mit einem dreidimensionalen durchgehenden β-SiC-Gerüst, welches im wesentlichen Keine Korngrenzen aufweist, gelöst, wobei das Verfahren die folgenden Schritte umfasst:
(a) Extrudieren eines Formkörpers aus einer Masse, die Silizium-haltige Partikel, vorzugsweise mit einer Korngröße aus einem Bereich von 0,1 bis 190 µm, Kohlenstoff-haltige Partikel, vorzugsweise mit einer Korngröße aus einem Bereich von 0,01 bis 150 µm, Aluminium-haltige Partikel und ein verkokbares, organisches Bindemittel umfasst, und
(b) Pyrolysieren des in Schritt (a) bereitgestellten porösen Formkörpers bei einer Temperatur von 600 bis 1000°C,
(c) Silizieren des porösen Formkörpers durch Erhitzen auf eine Temperatur in einem Bereich von 1100 bis 1500°C, vorzugsweise unter Sauerstofffreier Atmosphäre, unter Erhalt des porösen β-SiC-haltigen Formkörpers, welcher an der Oberfläche der offenen Poren und Kanäle eine Aluminiumschicht aufweist, und
(d) Oxidation der Aluminiumschicht aus Schritt (c) unter Erhalt einer Aluminiumoxidschicht.

Die Aluminiumschicht aus Schritt (c) befindet sich auf den Oberflächen der offenen Poren- und Kanalstruktur des porösen β-SiC-haltigen Formkörpers. Bei einer Ausführungsform wird in Schritt (d) nur die Oberfläche der Aluminiumschicht zu einer Aluminiumoxidschicht oxidiert. Bei einer anderen Ausführungsform wird in Schritt (d) die Aluminiumschicht vollständig zu Aluminiumoxid oxidiert.

Das erfindungsgemäße Verfahren verbessert die Extrusionsfähigkeit der zur Herstellung des porösen Formkörpers verwendeten Masse, wodurch der Abrieb an den verwendeten Werkzeugen verringert wird und/oder sehr feinzellige und dünnwandige Strukturen extrudiert werden können. Es hat sich gezeigt, dass Waben mit einer minimalen Wandstärke von 150 µm extrudiert werden können.

Ferner wird ein Formkörper durch das erfindungsgemäße Verfahren bereitgestellt, auf den direkt eine Katalysatorschicht aufgebracht werden kann, wobei die Katalysatorschicht ein hervorragendes Haftvermögen aufweist.

Bevorzugte Weiterbildungen des Verfahrens zur Herstellung von hochporösen keramischen β-SiC-Formkörpern sind in den Unteransprüchen 2 bis 12 angegeben.

Die der Erfindung Zugrundeliegende Aufgabe wird des Weiteren durch Bereitstellung eines porösen β-sic-haltigen keramischen Formkörpers gemäß Anspruch 13 gelöst. Bevorzugte Ausführungsformen sind in den Unteransprüchen 14 bis 21 angegeben.

Vorzugsweise liegen die Silizium-haltigen Partikel und die Aluminium-haltigen Partikel getrennt voneinander als einzelne Stoffe, insbesondere als getrennte Partikel vor. Es können jedoch auch Silizium-Aluminium-Legierung-haltige Partikel anstelle von Silizium-haltigen Partikeln in Kombination mit Aluminium-Partikeln eingesetzt werden. Vorzugsweise werden jedoch die Silizium-haltigen Partikel und die Aluminium-haltigen Partikel als getrennte Partikel und keine Partikel in Form einer Silizium-Aluminium-Legierung und/oder keine mit Aluminium dotierten SiliziumPartikel eingesetzt. Vorzugsweise umfassen die eingesetzten Aluminium-haltigen Partikel kein Aluminiumoxid und/oder weisen vorzugsweise keine Aluminiumoxidschicht auf.

Der Begriff "Silizium" im Sinne der Erfindung umfasst sowohl Silizium als auch Silizium-Aluminiumlegierungen mit vorzugsweise einem Aluminiumanteil von weniger als 20 Atomprozent, weiter bevorzugt von weniger als 10 Atomprozent, am meisten bevorzugt von weniger als 5 Atomprozent, bezogen auf die Menge an Silizium und Aluminium. Vorzugsweise umfasst der Begriff Silizium reines Silizium ohne Aluminiumlegierung und/oder ohne Aluminiumdotierung.

Vorzugsweise umfasst die Masse, aus der der poröse Formkörper bereitgestellt wird, Silizium-haltige Partikel mit einer Korngröße aus einem Bereich von 0,1 bis 100 µm und/oder Kohlenstoff-haltige Partikel mit einer Korngröße aus einem Bereich von 0,01 bis 50 µm.

Der Begriff "Aluminium-haltig" im Sinne der Erfindung umfasst sowohl Aluminium als auch Aluminiumlegierungen, in denen dem Aluminium Metalle wie beispielsweise Silizium, Magnesium und Zink zulegiert sind. Vorzugsweise werden als Aluminium-haltige Partikel Partikel aus reinem Aluminium eingesetzt.

Bei den in Schritt (a) eingesetzten Aluminium-Partikeln handelt es sich um Aluminium-Partikel mit oder ohne eine Aluminiumoxidschicht. Bei einer Ausführungsform umfasst die in Schritt (a) extrudierte Masse weniger als 5 Gew.-%, vorzugsweise weniger als 1 Gew.-%, am meisten bevorzugt kein Aluminiumoxid, bezogen auf das Aluminium. Vorzugsweise werden Aluminium-Partikel ohne Oxidschicht eingesetzt. Die Aluminium-haltigen Partikel können mit einer Schutzschicht überzogen sein, die das Aluminium vor Oxidation schützt. Die Schutzschicht zersetzt sich vorzugsweise bei der in Schritt (b) durchgeführten Pyrolyse. Die Schutzschicht kann ein Polymer oder Wachs sein. Als geeignet haben sich beispielsweise Stearate oder Polyethylenglycole erwiesen.

Vorzugsweise werden in Schritt (a) technisch reines bis analytisch reines Aluminium und/oder Silizium verwendet.

Die Aluminium-haltigen Partikel können jede mögliche Form haben. Besonders bevorzugt liegen die Aluminium-haltigen Partikel als Plättchen vor.

Bei einer Ausführungsform liegt das Verhältnis von Durchmesser zu Dicke der Aluminiumplättchen bei mindestens 4, vorzugsweise bei mindestens 6.

Bei einer Ausführungsform weisen die plättchenförmigen Aluminium-haltigen Partikel eine Dicke in einem Bereich von 0,01 bis 14 µm und einen mittleren Teilchendurchmesser in einem Bereich von 0,1 bis 70 µm auf. Vorzugsweise weisen die plättchenförmigen Aluminium-haltigen Partikel eine Dicke im Bereich von 0,1 bis 5 µm und einen mittleren Teilchendurchmesser in einem Bereich von 25 bis 35 µm auf. Am meisten bevorzugt weisen die plättchenförmigen Aluminium-haltigen Partikel eine Dicke in einem Bereich von 0,5 bis 2 µm und einen mittleren Teilchendurchmesser in einem Bereich von 28 bis 32 µm auf.

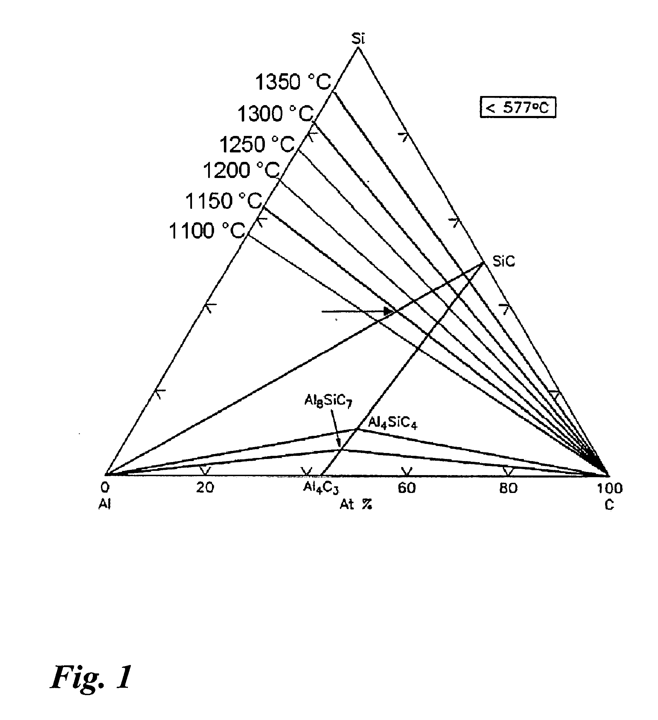

Bei einer Ausführungsform wird in Schritt (a) das atomare Verhältnis von Aluminium, Silizium und Kohlenstoff so eingestellt, dass die Bildung von Aluminiumcarbid und Aluminiumsiliziumcarbid vermieden wird. Vorzugsweise weist der pyrolysierte Formkörper ein Atomverhältnis von Al, Si und C auf, welches sich aus dem Dreiecksbereich der mit Al, Si und SiC gekennzeichneten Punkte im ternären Phasendiagramm, wie in Figur 1 angegeben, ergibt, wobei der Aluminiumgehalt in einem Bereich von 5 bis 40 Atomprozent, vorzugsweise in einem Bereich von 18 bis 23 Atomprozent, bezogen auf den Gehalt an Aluminium, Silizium und Kohlenstoff, liegt und der Siliziumgehalt in einem Bereich von 50 bis 55 Atomprozent, bezogen auf den Gehalt von Silizium und Kohlenstoff, liegt. Vorzugsweise liegen Kohlenstoff und Silizium im gleichen atomaren Verhältnis vor.

Bei einer Ausführungsform liegt die Menge an Aluminium bezogen auf das Gewicht des pyrolysierten Formkörpers in einem Bereich von 1 bis 35 Gew. %, vorzugsweise von 5 bis 35 Gew.-%, am meisten bevorzugt von 10 bis 35 Gew.-%.

Bei einem Aluminiumgehalt von mehr als 35 Gew.-% bezogen auf das Gewicht des pyrolisierten Formkörpers werden die Poren des Formkörpers verschlossen. Bei einem Aluminiumgehalt von weniger als 1 Gew.-% bezogen auf das Gewicht des pyrolisierten Formkörpers ist die Bildung einer Aluminium- bzw. Aluminiumoxidschicht erschwert.

Bei einer Ausführungsform wird der Formkörper nach Schritt (a) getrocknet.

Vorzugsweise wird in Schritt (a) der Masse ferner Titan, eine Titanverbindung und/oder eine Titanlegierung zugesetzt. Beispielsweise kann Titanhydrid verwendet werden. Das in Schritt (a) eingesetzte Aluminium kann auch Titan in Form einer Legierung umfassen. Das Titan, die Titanverbindung und/oder Titanlegierung kann in Form von Partikeln zugesetzt werden, welche im folgenden als Titan-haltige Partikel bezeichnet sind. Der mittlere Partikeldurchmesser der Titan-haltigen Partikel liegt vorzugsweise in einem Bereich von 1 bis 100 µm, weiter bevorzugt in einem Bereich von 55 µm bis 65 µm.

Bei einer Ausführungsform beträgt der Anteil an Titan im pyrolysierten Körper von 0,1 bis 2 Gew.-%, vorzugsweise von 0,4 bis 1,5 Gew.-%, am meisten bevorzugt von 0,6 bis 1 Gew.-%, jeweils bezogen auf das Gewicht des pyrolysierten Körpers.

Bei einer Ausführungsform liegt die Menge an Titan bezogen auf die Menge an Aluminium in einem Bereich von 2 bis 20 Gew.-%, vorzugsweise von 4 bis 10 Gew.-%.

Vorzugsweise wird bei einer Temperatur in einem Bereich von 1100 bis 1500°C siliziert. Vorzugsweise findet die Silizierung unter Sauerstoffausschluss, vorzugsweise unter Vakuum oder unter Argonatmosphäre, statt. Vorzugsweise findet die Silizierung nicht unter Stickstoffatmosphäre statt, wodurch die Bildung von Siliziumnititrid vermieden wird. Siliziumnitrid beeinflusst die Stabilität der porösen β-SiC-haltigen Formkörpers negativ.

Vorzugsweise weisen die in dem erfindungsgemäßen Verfahren verwendeten Kohlenstoff-haltigen Partikel eine innere Oberfläche von mindestens 350 m²/g nach BET auf. Das Verfahren zur Bestimmung des BET-Werts wird gemäß dem von Brunauer, Emmet und Teller im Journal of American Chemical Society, Band 60, 1938, Seite 309 beschriebenen Verfahren durchgeführt.

Vorzugsweise liegen die Silizium-haltigen Partikel, die Kohlenstoff-haltigen Partikel und die Aluminium-haltigen Partikel zu 80 Gew.-%, vorzugsweise zu 90 Gew.-%, besonders bevorzugt zu 100 Gew.-% nicht als Agglomerate und/oder nicht als Granulate vor, wobei sich diese Werte auf das Gesamtgewicht der Silizium-haltigen Partikel, Kohlenstoff-haltigen Partikel und Aluminium-haltigen Partikel beziehen.

Der extrudierte Formkörper enthält vor der Silizierung in Schritt (c) vorzugsweise kein SiC.

Vorzugsweise werden die Schritte (a), (b) und/oder (c) unter Sauerstoffausschluss, weiter bevorzugt unter Vakuum und/oder Argonatmosphäre, durchgeführt.

Nach Schritt (c) wird in Schritt (d) die auf dem β-SiC-Formkörper gebildete Aluminiumschicht durch Zugabe von Sauerstoff bzw. Sauerstoff-haltiger Atmosphäre zu Aluminiumoxid oxidiert. Bei einer Ausführungsform wird nach Schritt (c) in Schritt (d) die auf dem β-SiC-Formkörper gebildete Aluminiumschicht durch den Luftsauerstoff zu Aluminiumoxid oxidiert. Die Aluminiumoxidschicht, die in Schritt (d) durch Oxidation der Aluminiumschicht aus Schritt (c) entsteht, kann vorteilhaft als Haftvermittler, beispielsweise für katalytisch aktive Beschichtungen, wirken.

Bei einer Ausführungsform wird auf der Aluminiumoxidschicht eine Katalysatorschicht aufgebracht. Unter Aluminiumoxidschicht im Sinne der Erfindung sind reine Alumiumoxidschichten, vorzugsweise jedoch Aluminiumschichten mit einer Aluminiumoxidschicht auf der dem SiC abgewandten Seite, zu verstehen. Als Katalysatoren werden beispielsweise Edelmetalle, wie Pt, Pd, Rh, Ru und Re sowie deren Oxide und/oder Kombinationen davon, verwendet. Ebenso sind Übergangsmetalloxide wie V₂O₅, CeO₂, La₂O₃, MnO₂ und CuO möglich. Bewährt haben sich auch Mischoxide mit Yttrium und Mangan.

Da die Temperaturen für das erfindungsgemäße Verfahren unterhalb von 1900°C liegen, liegt der poröse Formkörper überwiegend in der β-Phase vor.

Während des Herstellungsverfahrens entstehen Schmelzen aus einer Aluminium-Silizium-Legierung, wobei der Anteil an Silizium stark variiert:
Während der Temperaturerhöhung bei der Pyrolyse schmilzt das Aluminium und bildet mit dem Silizium an den Kontaktstellen eine Legierung mit einem hohen Anteil an Aluminium, wobei der Schmelzpunkt des Eutektikums des Al-Si-System bei 577°C liegt. Bei unter 1000°C, d.h. während der Pyrolyse, findet noch keine Silizierung des Kohlenstoffgerüstes statt. Mit zunehmender Temperaturerhöhung bis 1500 °C geht mehr und mehr Silizium zusammen mit dem Aluminium in eine Legierungsschmelze über, die dann zu der Silizierung des Kohlenstoffes führt. Man beobachtet, dass je nach der Menge an zugegebenem Aluminium in der Ausgangsmischung der Silizierprozess schon bei 1100°C einsetzt und Temperaturen bis 1450°C sogar zur annähernd vollständigen Umsetzung des Siliziums zu SiC ausreichen.

Nach der Silizierung bleibt Aluminium gegebenenfalls zusammen mit dem Titan auf der Oberfläche der SiC-Struktur zurück. Das Aluminium bildet mit dem nicht umgesetzten Silizium eine Legierung mit einem sehr hohen Aluminiumanteil. Unterhalb von 1000°C zeigt Aluminium auf SiC nicht benetzenden Eigenschaften (Ferro and Derby, Acta metall. mater Vol. 43, S. 3061 bis 3073). Erst oberhalb von 1000°C sinkt der Kontaktwinkel von 140° auf 40°- 50° und es kommt zur Benetzung der SiC-Oberfläche. Nach Abschluss des Silizierprozesses in der Abkühlphase unterhalb von 1000°C nimmt die Benetzung der SiC-Oberfläche durch das Aluminium wieder stark ab und es kommt zu lokalen Anreicherungen des Aluminium. Für eine spätere Beschichtung, beispielsweise mit einem Katalysator, ist jedoch eine gleichmäßige Verteilung des Aluminiums auf dem SiC-Gerüst erwünscht.

Bei einer bevorzugten Ausführungsform wird daher in Schritt (a) zusätzlich Titan oder eine Titanverbindung zugesetzt. Beispielsweise wird Titanhydrid verwendet Titanhydrid zerfällt oberhalb von 400°C zu Titan und Wasserstoff. Der Wasserstoff wird mit den anderen Pyrolysegasen im Pyrolyseprozess verbrannt, und das Titan bildet oberhalb des Schmelzpunktes von Aluminium mit dem Aluminium eine Legierung. Jedoch ist der Titangehalt in der Masse in Schritt (a) vorzugsweise so gering, dass es keinen messbaren Einfluss auf eine Schmelzpunktveränderung gibt. Bei einer Ausführungsform werden zusätzlich ferner Titanaluminid, Titansilizid und/oder Titanaluminiumsilizid gebildet.

Durch das Zulegieren von Titan und/oder Titanverbindungen zu Aluminium wird der Benetzungswinkel auf SiC schon bei Temperaturen unter 1050°C, auf vorzugsweise 40 bis 70 °, verkleinert, so dass es durch Zumischen von Titan oder Titanverbindungen zum Aluminium möglich ist, eine sehr viel feinere und gleichmäßigere Verteilung des Aluminiums auf der SiC-Oberfläche zu erhalten. Die gleichmäßigere Verteilung des Aluminiums auf dem SiC bleibt auch unterhalb von 1000°C sogar bis zu vollständigen Abkühlung erhalten. Hierdurch können wesentlich feinere und/oder dünnere Aluminiumbeschichtungen erhalten werden.

Bei einer Ausführungsform werden Aluminiumbeschichtungen mit einer Dicke in einem Bereich von 50 bis 500 nm , vorzugsweise von 50 bis 300 nm, erhalten.

Weiterhin kann durch die Zugabe von Titan, Titanverbindungen und/oder Titanlegierungen auch die Entstehung von ungewolltem Aluminiumcarbid, beispielsweise von Al₄C₃, vermieden werden, welches sich durch Luftfeuchtigkeit zersetzt und die Stabilität des SiC-Gerüstes und dessen Hafteigenschaften, beispielsweise für einen Katalysator, nachteilig beeinflusst.

Bei einer Ausführungsform wird ein keramischer Formkörper erhalten, wobei die Oberfläche der offenen Poren und Kanäle des porösen β-SiC-haltigen Formkörpers zu 55 % bis 70 % mit einer Aluminiumoxidschicht bedeckt sind.

Ferner stellt das erfindungsgemäße Verfahren ein im Vergleich zum Stand der Technik kostengünstiges Verfahren zur Herstellung von SiC-basierten Keramiken dar, da die Temperaturen unter 1500°C liegen und die Energiekosten somit niedrig sind.

Vorzugsweise besteht das in dem erfindungsgemäßen porösen β-SiC-haltige Formkörper enthaltenen β-SiC zu 90 Gew.-%, vorzugsweise zu 95 %, weiter bevorzugt zu 98 Gew.-%, besonders bevorzugt zu 100% aus β-SiC (kubische Kristallform des SiC). Diese Wertangaben beziehen sich auf SiC ohne Legierungselemente. β-SiC bildet sich bei Temperaturen zwischen 1450 °C und 1900 °C aus Silizium und Kohlenstoff.

Unter dem Begriff "Silizium-haltig" im Sinne der Erfindung werden Stoffe verstanden, die elementares Silizium oder Siliziumlegierungen umfassen, jedoch vorzugsweise kein Siliziumcarbid und/oder SiO₂, enthalten. Als elementares Silizium kann jede Si-Modifikation, beispielsweise α, β, δ oder γ-Silizium verwendet werden. Als Legierungsmetalle können Zink, Magnesium und/oder Titan verwendet werden.

Unter dem Begriff "Kohlenstoff-haltig" im Sinne der Erfindung werden vorzugsweise Stoffe verstanden, die elementaren Kohlenstoff, am meisten bevorzugt Kohlenstoff in der Graphitmodifikation enthalten oder umfassen.

Vorzugsweise werden Kohlenstoffe verwendet, deren mikrokristalline Bereiche eine poröse Struktur aufbauen, wie es beispielsweise bei Aktivkoks und Aktivkohle der Fall ist. Unter Aktivkoks im Sinne der Erfindung wird eine Kohlenstoff-haltige Substanz verstanden, die nach der Carbonisierung aus dem Rohstoff bereits eine innere Oberfläche aufweist. Die Carbonisierung, welche auch als Verkokung bezeichnet wird, von bestimmten Ausgangsstoffen wie zum Beispiel der makroporöse Polymeradsorber Ambersorb 600^{®} von RohmHaas, führt bereits ohne weitere Aktivierung zu inneren Oberflächen von 500 bis 600 m²/g.

Unter Siliziumschmelze im Sinne der Erfindung ist eine Schmelze einer Silizium-Aluminium-Legierung zu verstehen. Die Silizium-Aluminium-Legierung kann noch weitere Legierungselemente, insbesondere Titan, Magnesium und/oder Zink, enthalten.

Vorzugsweise werden die Kohlenstoff-haltigen Partikel (welche nachstehend auch als pulverförmige Kohlenstoffe bezeichnet werden) aus der Gruppe, bestehend aus Aktivkohle, Koks, Kohle, Ruß, Graphit, pyrolysiertem Harz und Mischungen davon, ausgewählt. Besonders bevorzugt wird Aktivkohle, Graphit und/oder Mischungen davon verwendet. Beide Stoffe besitzen aufgrund ihrer mikrokristallinen Struktur die Eigenschaft, sich besonders gut mit Silizium, Silizium-haltigen Substanzen und/oder Siliziumlegierungen zu SiC umzusetzen. Vorzugsweise erfolgt die Umsetzung von Silizium und/oder dem Silizium-haltigen Material mit Aktivkohle, Graphit und/oder Mischungen davon, welche über ein verkokbares organisches Bindemittel gebunden ist/sind.

Die pulverförmigen Kohlenstoffe aus der Gruppe, bestehend aus Aktivkohle, Koks, Kohle, Ruß, Graphit, pyrolysiertem Harz und Mischungen davon, können beispielsweise aus Ausgangsmaterialien wie Holz, Fruchtkerne, Fruchtschalen, Pech oder Teer hergestellt werden. Als pulverförmige Kohlenstoffe sind allgemein biomorphe Kohlenstoffe, d.h. Kohlenstoffe, die durch Pyrolyse von biomorphen Material, wie Holz, Fruchtkernen und Fruchtschalen erhalten werden, bevorzugt. Biomorphe Kohlenstoffe lassen sich mit Silizium besonders gut zu SiC umsetzen, da sie zum großen Teil mikrokristalline Bereiche aufweisen.

Kohlenstoff ordnet sich im Graphit in der hexagonalen Struktur in übereinander liegenden Ebenen an. In rein kristallinem Graphit sind diese Ebenen parallel zueinander angeordnet und es gibt keine ungeordneten Bereiche. In teilkristallinem Kohlenstoff, wie beispielsweise Aktivkohle, gibt es große Bereiche, in denen die Graphitebenen ungeordnet zueinander vorliegen. Dies sind die amorphen Bereiche. In diesen amorphen Bereichen gibt es kleine Bereiche, in denen drei bis vier Graphitebenen parallel zueinander vorliegen. Diese Bereiche nennt man mikrokristalline Bereiche. Unter dem Begriff "mikrokristalline Bereiche" sind also kleinere Bereiche zu verstehen, in denen drei bis vier Graphitebenen parallel zueinander vorliegen.

Unter dem Begriff "Silizieren" im Sinne der Erfindung wird die Umsetzung von Silizium- und Kohlenstoff-haltigen Verbindungen zu SiC verstanden. Auf der Oberfläche des SiC-Körpers bildet sich eine Aluminiumschicht, die in eine darauf folgenden Schritt oxidiert wird. Bei einer Ausführungsform umfasst die Aluminiumschicht von 2 bis 20 Gewichtsprozent, vorzugsweise von 4 bis 10 Gewichtsprozent Titan, bezogen auf die Menge an Aluminium.

Unter dem Begriff "verkokbar" im Sinne der Erfindung werden Stoffe verstanden, bei denen beim Erhitzen über 500°C unter inerter Atmosphäre ein Rückstand zurückbleibt, der mindestens zu 85 Gew.-% aus Kohlenstoff, vorzugsweise zu mindestens 95 Gew.-%, bezogen auf das Gesamtgewicht des Rückstandes, aus Kohlenstoff besteht.

Unter dem Begriff "Bindemittel" werden im Sinne der Erfindung Stoffe verstanden, die beim Vermischen mit den Silizium-haltigen Partikeln, den Kohlenstoff-haltigen Partikeln und den Aluminium-haltigen Partikeln eine Masse bilden, aus der ein Formkörper geformt werden kann.

Als verkokbares, organisches Bindemittel werden vorzugsweise organische Harze oder modifizierte Stärken verwendet. Sowohl die organischen Harze als auch die modifizierten Stärken sind carbonisierbar bzw. verkokbar. Dabei sind Harze mit aromatischen Kernen besonders bevorzugt. Neben dem Einsatz von pulverförmigem Phenolharz wie Novolak haben sich auch modifizierte Stärken, die sowohl pulverförmig als auch in flüssiger Form eingesetzt werden können, als geeignet erwiesen. Novolake haben bis 1000°C eine Kohlenstoffausbeute von etwa 55% und wirken zum einen für die Kohlepartikel als Binder, zum anderen setzen sie sich, da sie durch die Pyrolyse in einen so genannten Glaskohlenstoff umgewandelt werden, ebenfalls mit freiem Silizium zu SiC um. Modifizierte Stärken haben mit 20% eine deutlich niedrigere Kohlenstoffausbeute in der Pyrolyse bis 1000°C, bilden aber auch ähnlich wie der Glaskohlenstoff aus dem Phenolharz Kohlenstoffbrücken zwischen den Kohlstoffpartikeln aus. Modifizierte Stärken sind chemisch so verändert, dass sie eine höhere Hitzebeständigkeit, Säurebeständigkeit und Scherstabilität aufweisen, sie werden jedoch zu den gleichen Stoffen wie native Stärke im menschlichen Körper abgebaut. Modifizierte Stärken sind beispielsweise oxidierte Stärke (E 1404), Monostärkephosphat (E 1410), Distärkephosphat (E 1412), phosphatiertes Distärkephosphat (E 1413), acetyliertes Distärkephosphat (E 1414), acetylierte Stärke (E1420).

Die Verwendung eines carbonisierbaren Bindemittels ist vorteilhaft für die Stabilität nach der Entbinderung und für die Stabilität im porösen Formkörper. Unter "Entbinderung" wird die pyrolytische Zersetzung der Bindemittel und anderer Hilfsstoffe verstanden, welche auch als Verkokungsprozess oder Carbonisierungsprozess bezeichnet werden kann. Ohne das carbonisierbare Bindemittel liegen die Silizium- und Kohlenstoffpartikel und die Aluminium-haltigen Partikel nur in einem sehr schwach gebundenen Gerüst in dem Formkörper vor. Durch die Verwendung von carbonisierbarem Bindemittel sind die Kohlenstoff-haltigen Partikel, die Silizium-haltigen Partikel und die Aluminium-haltigen Partikel nach der Entbinderung über das carbonisierte Bindemittel in einem stabilen Formkörper gebunden. Die Bindung der Kohlenstoffpartikel über das carbonisierte Bindemittel führt weiterhin zu einer Verbesserung der Stabilität der durch den Silizierprozess entstehenden SiC-Struktur. Die Bindung zwischen den SiC-Kristallen in der porösen Struktur wird bereits durch die Silizium- und Kohlenstoff-haltige Struktur vorgeprägt.

Die Porosität des β-SiC-haltigen keramischen Formkörpers kann äußerst vorteilhaft über die Partikelgröße der zur Herstellung des β-SiC-Formkörpers verwendeten Kohlenstoff-haltigen, Silizium-haltigen Partikel und die Aluminium-haltigen Partikel eingestellt werden.

Bei Verwendung grober Ausgangspulver wird eine sehr grobporige Struktur bereits in der pyrolysierten Zwischenstufe erhalten, aus der dann durch die Aufschmelzung des Siliziums bzw. der Siliziumlegierung und Bildung von SiC eine entsprechende grobporige SiC-Struktur entsteht. Vorzugsweise wird die Silizierung unter Vakuum oder unter inerter (sauerstofffreier) Atmosphäre, beispielsweise Argonatmosphäre durchgeführt. Die abgesaugte Schmelze hinterlässt Poren, die zuvor mit Silizium-haltigen Partikeln bzw. Aluminium-haltigen Partikeln ausgefüllt waren. Nach der Bildung des β-SiC bleibt diese Porenstruktur bestehen. Demzufolge erhält man auch kleinere Poren bei der Verwendung einer kleineren Kornverteilung des Siliziums bzw. des Aluminiums. Die Korngrößenverteilung wird nach der gewünschten Porenverteilung im porösen Formkörper ausgewählt.

Da die von dem Silizium- und Kohlenstoff-haltigen und Aluminium-haltigen Formkörper vorgegebene Matrix oder Struktur siliziert wird, das heißt mit Silizium oder Silizium-haltigen Substanzen umgesetzt wird, wird die vorgegebene Matrix oder Struktur auf den β-SiC-haltigen Formkörper "übertragen". Somit kann auf überraschend einfache Art und Weise ein β-SiC-haltiger Formkörper mit vorgegebener oder definierter Porosität hergestellt werden, wobei die Oberfläche der Kanäle und Poren mit einer Aluminium und/oder Aluminiumoxidschicht versehen ist.

Bei einer Ausführungsform beträgt der Anteil an Aluminium in dem porösen β-SiC-haltigen Formkörper beträgt 1 bis 35 Gew. %, vorzugsweise von 5 bis 35 Gew.-%, am meisten bevorzugt von 10 bis 35 Gew.-%, bezogen auf die Masse des porösen β-SiC-haltigen Formkörpers.

Die Kanalwände und/oder Poren sind wenigstens teilweise, vorzugsweise im Wesentlichen vollständig, weiter bevorzugt vollständig mit einer Aluminium und/oder Aluminiumoxidschicht versehen. Dabei hat sich gezeigt, dass insbesondere dann eine möglichst homogene Verteilung des Aluminiums auf der porösen SiC-Struktur am Ende von Schritt (c) erreicht wird, wenn der Ausgangsmischung zusätzlich Titan oder eine Titanverbindung oder eine Titanlegierung zugesetzt wird. Im Schritt (d) entsteht dann eine homogene Aluminiumoxidschicht, die wiederum als Haftgrund für weitere Beschichtungen wirken kann.

Bei einer Ausführungsform des erfindungsgemäßen Verfahrens wird ein poröser β-SiC-haltiger Formkörper erhalten, bei welchem 55% bis 70% der Oberfläche der offenen Poren und Kanäle mit der Aluminiumoxidschicht, vorzugsweise durchgehend, bedeckt sind. Vorzugsweise ist 65% bis 70% der Oberfläche der offenen Poren und Kanäle mit der Aluminiumoxidschicht bedeckt.

Bei einer Ausführungsform wird der Silizium-, Kohlenstoffhaltige und Aluminium-haltige Formkörper in eine Kanäle-haltige Struktur extrudiert, die aus einer Vielzahl von Kanälen besteht. Vorzugsweise weist die Kanäle-haltige Struktur sich entlang der Längsachse des Formkörpers erstreckende Kanäle auf, die wesentlichen parallel zueinander angeordnet sind. Der Querschnitt der Kanäle wird im Allgemeinen auch als Zelle bezeichnet. Vorzugsweise weisen die Kanäle einen quadratischen oder polygonalen Querschnitt, beispielsweise hexagonalen oder octogonalen Querschnitt, auf. Besonders bevorzugt ist ein hexagonaler Querschnitt, da dieser beim Durchströmen mit gasförmigen und/oder flüssigen Stoffen einen geringeren Reibungswiderstand erzeugt. Vorzugsweise weist die Kanäle-haltige Struktur eine Kanaldichte von 50 bis 400 Kanälen/ inch², weiter bevorzugt von 150 bis 350 Kanälen /inch², besonders bevorzugt von 200 bis 300 Kanälen /inch² auf. Unter "Kanaldichte" gemäß der Erfindung wird die Zahl der Kanäle pro inch² senkrecht zur Längsachse der Kanäle in dem porösen Formkörper verstanden.

Die Kanalwandstärken sollten dabei bei dem porösem β-SiC -Formkörper so dünn wie möglich sein. Durch das erfindungsgemäße Extrusionsverfahren wird die Qualität solcher Formkörper mit dünnwandigen Kanälen verbessert.

Bei einer bevorzugten Ausführungsform weisen die Kanalwände des extrudierten β-SiC-Formkörpers eine Wandstärke in dem Bereich von 50 µm bis 480 µm, vorzugsweise von 50 bis 280 µm, bevorzugt von 150 bis 280 µm, noch weiter bevorzugt von 200 bis 250 µm, auf.

Hierdurch wird eine ausreichende Stabilität bei einer deutlich vergrößerten Oberfläche erreicht, was die Herstellung von kleineren Katalysatorträgern ermöglicht. Gerade für den Abgasbereich von Diesel-PKWs ist es notwendig, Katalysatorträger mit kleinerem Volumen bereitzustellen. Die Herstellung dünnerer Wandstärken wird erst durch das erfindungsgemäße Herstellungsverfahren ermöglicht, da kein SiC aber zusätzlich Aluminium in der Ausgangsmasse vorliegt. Durch die Kombination eines Katalysatorträgers mit vielen Kanälen/inch² und geringen Wandstärken wird eine deutlich erhöhte Oberfläche erreicht, die die Bereitstellung von kleineren Katalysatorträgern bei gleich bleibender Oberfläche ermöglicht.

Bei einer Ausführungsform des erfindungsgemäßen Verfahrens werden die Kanäle des Formkörpers bei dem erfindungsgemäßen Verfahren nach Schritt (a), (b) und/oder (c) wechselseitig verschlossen.

Bei einer Ausführungsform weisen die Silizium-haltigen Partikel eine Korngröße aus einem Bereich von 0,1 bis 190 µm und/oder die Kohlenstoff-haltigen Partikel weisen eine Korngröße aus einem Bereich von 0,01 bis 150 µm auf. Bei einer bevorzugten Ausführungsform weisen die Silizium-haltigen Partikel eine Korngröße aus einem Bereich von 0,1 bis 75 µm und vorzugsweise einen d₅₀-Wert von 40 bis 50 µm auf und/oder die Kohlenstoff-haltigen Partikel weisen eine Korngröße aus einem Bereich von 0,01 bis 35 µm und vorzugsweise einen d₅₀-Wert von 8 bis 15 µm auf.

Beispielsweise werden für einen Formkörper mit Poren in einer mittleren Porengröße im Bereich von 10 bis 15 µm Kohlenstoff-haltige Partikel mit einer Korngröße im Bereich von 8 bis 15 µm verwendet und es werden Silizium-haltige Partikel mit einer Partikelgröße im Bereich von 0,1 bis 75 µm und einem d₅₀-Wert von 45 µm verwendet.

Der d₅₀-Wert gibt die Partikelgröße an, die für 50% aller Partikel die Obergrenze darstellt, d.h. d₅₀-Wert = 45µm bedeutet, dass 50% aller Partikel in dem Pulver des jeweiligen Stoffes kleiner als 45 µm sind.

Als Flüssigphase werden vorzugsweise wässrige Lösungsmittelgemische, verwendet. Besonders bevorzugt wird Wasser verwendet.

Weiterhin werden der zu extrudierenden Mischung bevorzugt Extrusionshilfsmittel wie Plastifizierer, Wachse, und/oder Tenside, etc. zugesetzt. Diese Extrusionshilfsmittel bewirken eine verbesserte Gleitfähigkeit der Partikel zueinander und führen zu einer homogenen Verteilung sämtlicher Bestandteile während der Extrusion.

Der zu extrudierenden Mischung werden vorzugsweise auch Grünkörperbindemittel, beispielsweise Celluloseether oder Celluloseetherderivate, zugesetzt. Beispielsweise kann Methylhydroxypropylcellulose als Grünkörperbindemittel verwendet werden. Das Grünkörperbindemittel stabilisiert den nach der Extrusion erhaltenen Formkörper. Darüber hinaus fördert das Grünkörperbindemittel ebenfalls die Homogenisierung der verschiedenen Bestandteile des Gemisches während der Extrusion.

Bei einer bevorzugten Ausführungsform werden in die zu extrudierende Mischung auch Fasern eingearbeitet. Die Faser können beispielsweise Kohlenstofffasern und/oder Kurzfasern aus SiC, insbesondere Whisker, und/oder Polymerfasern sein, denen unterschiedliche Funktionen zukommen.

Unter dem Begriff "Whisker" im Sinne der Erfindung werden monokristalline Kurzfasern verstanden. Kurzfasern aus SiC können zur Verstärkung der SiC-Struktur eingesetzt werden. Vorzugsweise bestehen die SiC-Kurzfasern aus β-SiC.

Die Kohlenstofffasern können eine Verbesserung der mechanischen Stabilität bewirken. Durch das Einbringen von Kohlenstofffasern auf Basis von PAN (Polyacrylnitril) oder Pech kann ein kohlenstofffaserverstärkter SiC-Körper erhalten werden. Durch den Pyrolyseprozess werden die Kohlenstofffasern nicht beeinträchtigt und durch den Silizierprozess werden die Fasern von außen teilweise ansiliziert, d.h. außen liegender Kohlenstoff wird teilweise zu SiC umgesetzt, die Kohlenstofffasern bleiben im Kern jedoch erhalten. Das Silizium bzw. die Siliziumlegierung setzt sich primär mit den Partikeln des Kohlenstoffs zu SiC um und ummantelt die Kohlenstofffasern. Durch diese Ummantelung werden die Kohlenstofffasern vor eventuell auftretenden oxidierenden Bedingungen geschützt. Die eingebrachten Kohlenstofffasern führen zu einer deutlichen Verbesserung der Thermoshockstabilität.

Bei Verwendung von Polymerfasern können in dem Formkörper nach Durchführung einer Pyrolyse gerichtete, vorzugsweise lineare, Porenstrukturen erzeugt werden. Bei den Polymerfasern handelt es sich beispielsweise um organische Polymere, die bei der Pyrolyse verbrennen. Als Polymerfasern können beispielsweise PE-Fasern (Polyethylenfasern) verwendet werden. Als mögliche Polymerfasern können ferner auch Naturfasern wie Jute, Flachs, Cellulose oder Ligninfasern verwendet werden. Die Polymerfasern verbrennen teilweise oder vollständig bei der Pyrolyse und hinterlassen Hohlräume. Die Naturfasern werden bei der Pyrolyse zu Kohlenstofffasern umgewandelt, wodurch ihr Volumen abnimmt bzw. auch verbrannt. Hierdurch können gerichtete Porenstrukturen erzeugt werden. Über den Faserdurchmesser und die Faserlänge der KohlenstoffFasern kann sowohl der Porendurchmesser als auch die Porenlänge bzw. -tiefe definiert eingestellt werden. Bei Verwendung von Fasergemischen unterschiedlicher Faserlänge und/oder mit unterschiedlichem Faserdurchmesser kann in dem Formkörper eine definierte Porenstruktur oder Porenverteilung eingestellt werden. Hierdurch kann ein SiC-haltiger Formkörper mit definierter Porengröße, Porenverteilung und Porentiefe hergestellt werden. Vorzugsweise werden Polymerfasern mit einer Faserlänge im Bereich von 0,5 bis 5 mm eingesetzt. Alternativ oder kumulativ zu den Polymerfasern kann auch ein Polymerpulver verwendet werden, wobei durch das Polymerpulver keine gerichtete Porenstruktur entsteht.

Nach der Extrusion wird der erhaltene Formkörper vorzugsweise pyrolysiert. Die Pyrolyse erfolgt bevorzugt in einer inerten, vorzugsweise nichtoxidierenden, Atmosphäre. Beispielsweise kann die Pyrolyse in einer Inertgasatmosphäre wie Stickstoff oder Argon oder unter Vakuum durchgeführt werden. Die Pyrolyse kann bei einer Temperatur von 600 °C bis 1000°C. durchgeführt werden. Bei der Pyrolyse werden die Extrusionshilfsmittel entfernt sowie die Bindemittel, wie beispielsweise Phenolharze, carbonisiert und werden unter Volumen- und Gewichtsreduktion in Glaskohlenstoff umgewandelt. Hierdurch bilden sich Poren in dem Formkörper.

Unter dem Begriff "Glaskohlenstoff" ist eine Kohlenstoffform mit ausgeprägter struktureller Fehlordnung und glasartigem Bruchbild zu verstehen. Die Kohlenstoffatome mit sp²-Bindung sind in ebenen Schichten mit hexagonaler Symmetrie angeordnet. Im Gegensatz zu Graphit sind diese Schichten bei glasartigem Kohlenstoff nicht regelmäßig über größere Bereiche hinweg geordnet. Bänder aus graphitisch geordnetem, übereinander geschichteten Strukturen bilden eine polymerähnliche Knäuelstruktur. Glaskohlenstoff ist im Makrobereich porenfrei, zwischen den Graphitschichten sind aber zahlreiche Hohlräume vorhanden. Dies führt zu einer außerordentlich hohen Korrosionsbeständigkeit gegen saure und alkalische Reagentien. Glaskohlenstoff wird lediglich durch Sauerstoff über 600°C und oxidierende Schmelzen angegriffen. Glaskohlenstoff lässt sich im Harz-Silizium-Aluminiumpulvergemisch gut umsetzen, eine externe Infiltration von Glaskohlenstoff mit Si-Schmelze ist nicht ohne weiteres möglich.

Durch die Koextrusion von Silizium-, Kohlenstoff-haltigen Partikeln und Aluminium-haltigen Partikeln entsteht bei der Pyrolyse eine poröse Struktur, die Kohlenstoff, Silizium und Aluminium homogen vermischt enthält, wobei der Kohlenstoff aus dem carbonisierten Bindemittel sowohl die Kohlenstoff-haltigen Partikel, die Aluminium-haltigen Partikel als auch die Silizium-haltigen Partikel als Binder zusammenhält.

Die extrudierten Formkörper können eine quaderförmige oder zylindrische Formgebung aufweisen. Die Formkörper können auch einen polygonalen Querschnitt, beispielsweise hexagonalen oder octogonalen Querschnitt, aufweisen. Vorzugsweise weisen die extrudierten Formkörper, sich entlang der Längsachse des Formkörpers erstreckende Kanäle auf, die wesentlichen parallel zueinander angeordnet sind.

Für die Herstellung der Formkörper in Schritt (a) können beispielsweise die in der DE 101 04 882 A1 und DE 102 13 016 A1 offenbarten Herstellungsverfahren, die hiermit unter Bezugnahme aufgenommen sind, verwendet werden, wobei der Formkörper durch entsprechende Modifikation der Verfahren erhalten wird:
Das erfindungsgemäße Herstellungsverfahren erfolgt vorzugsweise in drei Wärmebehandlungsstufen:
   1. Trocknung des extrudierten Formkörpers, der Silizium- und Kohlenstoffhaltige und Aluminium-haltige Partikel enthält, unter Bildung eines Grünkörpers.
   2. Pyrolyse unter sauerstofffreier, vorzugsweise inerter Atmosphäre, z.B. unter Stickstoff oder Argon unter ständiger Spülung zum Austragen der Pyrolyseprodukte.
   3. Silizierung zur Umwandlung der Kohlenstoffs und des Siliziums in *β*-SiC, vorzugsweise in sauerstofffreier Atmosphäre, beispielsweise unter Vakuum oder Argonatmosphäre, wobei das Aluminium bzw. eine Aluminium-Silizium-Legierung mit einem geringen Anteil an Si an der Oberfläche des SiC zurückbleibt.

Vorzugsweise wird in keiner Stickstoffhaltigen Atmosphäre siliziert. Hierdurch wird die Bildung von Siliziumnitrid vermieden. Siliziumnitrid beeinflusst die Stabilität des porösen β-SiC-Formkörpers nachteilig.

Die Trocknung und die Pyrolyse erfolgt beispielsweise mit Mikrowellentechnik. Sowohl die Kohlenstoffpartikel, Siliziumpartikel als auch die Aluminiumpartikel koppeln aufgrund ihrer Leitfähigkeit an die Mikrowellenstrahlung an. Insbesondere die Kohlenstoffpartikel heizen sich durch die Mikrowellenstrahlung stark auf. Auf diese Weise können die Grünkörper mit der Hilfe von Mikrowellen schneller auf die Pyrolysetemperatur aufgeheizt werden. Vorzugsweise verwendet man ein Verfahren, bei dem der Grünkörper gleichzeitig mit konventioneller Heiztechnik von außen (beispielsweise durch Widerstandheizelemente wie Kantalheizer) und mit Mikrowellentechnik von innen aufgeheizt wird. Um einen Einfluss des inhomogenen Mikrowellenfeldes auf den Pyrolyseprozess zu vermeiden, wird die Temperaturbehandlung vorzugsweise in einem Durchlaufofen durchgeführt.

Im Trocknungs-Schritt wird das Wasser aus dem nassen extrudierten Grünkörper entfernt. Der so erhaltene trockene Formkörper weist eine sehr dichte Struktur auf, da er neben den Extrusionshilfsmitteln auch noch das Bindemittel enthält.

Durch die Pyrolyse werden alle Hilfsmittel wie der Celluloseether und die Seife aus der Struktur herausgebrannt. Weiterhin wird das verwendete Bindemittel carbonisiert, d.h. es wird unter Abspaltung von Abbauprodukten in eine reine Kohlenstoffstruktur umgewandelt. Hierdurch verliert es deutlich an Volumen. Dieser kontrollierte Abbrand der Hilfsmittel und eines Teiles des Bindemittels führt zu einer porösen Struktur. Es entsteht ein poröses Kohlenstoffgitter, in dem die Silizium-haltigen Partikel und Aluminium-haltigen Partikel fest eingebunden sind. Das Aluminium befindet sich teilweise auf der Oberfläche der Siliziumpartikel. Im Grenzbereich liegt in geringen Mengen eine Aluminium-Silizium-Legierung vor.

Die vorzugsweise durchgeführte Pyrolyse des extrudierten Formkörpers erfolgt vorzugsweise bei einer Temperatur von 600 bis 1000 °C, weiter bevorzugt bei einer Temperatur von 700 bis 900 °C und besonders bevorzugt bei einer Temperatur von 750 bis 850 °C in inerter, sauerstofffreier, Atmosphäre. Die Pyrolyse findet vorzugsweise in Stickstoffatmosphäre statt. Um eine Zerstörung oder Rissbildung der Formkörper durch die bei der pyrolytischen Zersetzung der organischen Bindemittel und/oder Extrusionshilfsmittel entstehenden Gase zu verhindern, wird vorzugsweise bis zu einer Temperatur von ca. 400 bis 500 °C eine langsame Heizrate gewählt, beispielsweise von 1 bis 2 °C/min.. Im nachfolgenden kann eine höhere Heizrate, beispielsweise von 5 °C/min., verwendet werden. Die Pyrolysetemperatur wird vorzugsweise für 0,25 bis 4h, besonders bevorzugt für 0,5 bis 1 Stunde gehalten.

Der nachfolgende Silizierungsschritt erfolgt bevorzugt bei Temperaturen oberhalb des Schmelzpunktes der Legierung der verwendeten Silizium-Aluminium-Pulvermischung, vorzugsweise bei einer Temperatur zwischen 1100 °C und 1500°C, am meisten bevorzugt bei 1150 bis 1500 °C. Die Endtemperatur wird vorzugsweise zwischen 1 und 4 Stunden gehalten. Das geschmolzene Silizium bzw. die Silizium-Aluminium-Legierung wird hierbei in das poröse Kohlegerüst gesaugt und hinterlässt Hohlräume, die die späteren Poren bilden. Am Haltepunkt oberhalb des Schmelzpunktes erfolgt die Umwandlung in das β-SiC. Es handelt sich hierbei um keinen klassischen Sintervorgang, sondern um eine chemische Umwandlung in eine neue Verbindung. Vorzugsweise wird die Silizierung unter Sauerstoffausschluss durchgeführt. Besonders bevorzugt wird die Pyrolyse unter Vakuum oder Argonatmosphäre durchgeführt. Das Aluminium bleibt auf der Oberfläche der SiC-Struktur zurück. Das Aluminium kann auch noch Reste an Silizium enthalten.

Die Pyrolyse und/oder die Silizierung werden vorzugsweise in inerter, Sauerstofffreier Atmosphäre durchgeführt.

Die Pyrolyse des Formkörpers und die Silizierung des Formkörpers können in zwei getrennten Verfahrensschritten durchgeführt werden. Die zweistufige Verfahrensführung der Pyrolyse und Silizierung kann auch in einem einstufigen Verfahren zusammengefasst werden. Die bei der pyrolytischen Zersetzung des Bindemittels und etwaig vorhandener Extrusionshilfsmittel entstehenden gasförmigen Produkte (Pyrolysate) stellen keine wesentliche Beeinträchtigung der Silizierung dar. Gemäß einer bevorzugten Weiterbildung der Erfindung werden die Silizierung und die Pyrolyse sowie die reaktive Umsetzung zu SiC-, SiC/C-, Si/SiC- und/oder Si/SiC/C-Keramiken in inerter Atmosphäre in einem Verfahrensschritt zusammen durchgeführt. Vorzugsweise wird die Pyrolyse unter Stickstoffatmosphäre unter ständigem Spülen statt, um die Pyrolyseprodukte abzuführen. Die Silizierung findet vorzugsweise in einer inerten, Sauerstoff-freien Atmosphäre, besonders bevorzugt unter Vakuum oder Argonatmosphäre, statt.

Erfindungsgemäß wird ein poröser β-SiC-haltiger keramischer Formkörper bereitgestellt, welcher einen mittleren Porendurchmesser, welcher auch als mittlere Porengröße bezeichnet wird, im Bereich von 0,1 µm bis zu 50 µm und eine Aluminiumoxidschicht an der Oberfläche der offenen Poren und Kanäle des β-SiC-haltiger keramischer Formkörper aufweist.

Bei einer Ausführungsform sind 55% bis 70% der Oberfläche der offenen Poren und Kanäle des porösen β-SiC-haltigen Formkörpers mit der Aluminiumoxidschicht, vorzugsweise durchgehend, ausgekleidet. Vorzugsweise sind 65% bis 70% der Oberfläche der offenen Poren und Kanäle des porösen β-SiC-haltigen Formkörpers mit der Aluminiumoxidschicht ausgekleidet.

Bei einer Ausführungsform beträgt der Anteil an Aluminium in dem porösen β-SiC-haltigen Formkörper 1 bis 35 Gew. %, vorzugsweise von 5 bis 35 Gew.-%, am meisten bevorzugt von 10 bis 35 Gew.-%, bezogen auf die Masse des porösen β-SiC-haltigen Formkörpers.

Bei einer Ausführungsform umfasst die Aluminiumoxidschicht auch Titan, Titanlegierungen und/oder Titanverbindungen vorzugsweise in der oxidierten Form.

Bei einer Ausführungsform des β-SiC-haltiger keramischer Formkörpers ist die Oberfläche der offenen Poren und Kanäle zu 40%, bevorzugt zu 55%, weiter bevorzugt zu 70 %, bezogen auf die Oberfläche der offenen Poren und Kanäle, durchgehend mit der Aluminiumoxidschicht auskleidet.

Bei einer Ausführungsform liegt die Schichtdicke der Aluminiumoxidschicht unterhalb von 500 nm. Vorzugsweise liegt die Schichtdicke der Aluminiumoxidschicht in einem Bereich von 50 nm bis 500 nm, weiter bevorzugt in einem Bereich von 100 bis 300 nm.

Vorzugsweise weist der β-SiC-haltiger keramischer Formkörper eine Porengröße von 3 bis 35 µm, weiter bevorzugt zwischen 4 und 20 µm, besonders bevorzugt zwischen 5 bis 15 µm, auf. Unter der mittleren Porengröße ist die durchschnittliche Porengröße, die sich aus dem Mittelwert aller Porengrößen ergibt, zu verstehen. Der Porendurchmesser kann auch als Porengröße bezeichnet werden.

Vorzugsweise weist der poröse β-SiC-haltige Formkörper ein dreidimensionales, durchgehendes β-SiC-Gerüst auf.

Durch den Zusatz von Titan und/oder einer Titanlegierung wird die Bildung von Aluminiumcarbid und/oder Aluminiumsiliziumcarbid, insbesondere von Al₄C₃, weitgehend vermieden. Vorzugsweise enthält der β-SiC-haltige keramische Formkörper weniger als 0,01 Gew.-% Aluminiumcarbid und/oder Aluminiumsiliciumcarbid, bezogen auf den Gehalt an Aluminium. Am meisten bevorzug enthält der β-SiC-haltige Formkörper kein Aluminiumcarbid und/oder Aluminiumsiliziumcarbid.

Bei einer Ausführungsform umfasst der β-SiC-haltige keramische Formkörper eine Aluminium-Titanlegierung und/oder deren Oxide als Beschichtung. Vorzugsweise beträgt der Gehalt an Titan von 2 Gew.-% bis 20 Gew.-%, weiter bevorzugt von 4 Gew.-% bis 10 Gew.-%, bezogen auf die Menge an Aluminium. Das gleiche gilt für die Oxide, wobei die Berechnung entsprechend der Molekulargewichte angepasst wird.

Bevorzugte Weiterbildungen des porösen β-SiC-haltiger keramischer Formkörpers sind in den Unteransprüchen 14 bis 21 angegeben.

Die Porosität des β-SiC-haltigen Formkörpers liegt dabei in einem Bereich von 5% bis 90%, vorzugsweise von 20% bis 80%, besonders bevorzugt von 30 % bis 65%. Für poröse Partikelfiltermedien werden bevorzugt Porositäten in einem Bereich von 20% bis 70%, besonders bevorzugt von 30% bis 65% eingestellt. Unter Porosität versteht man die Summe der offenen Hohlräume in einem festen, porösen Körper, bezogen auf dessen äußeres Volumen. Die Summe der offenen Hohlräume wird dabei in % bezogen auf das äußere Volumen angegeben, welches 100% entspricht.

Vorzugsweise weist der poröse β-SiC-haltige Formkörpers eine differentielle Porenverteilung mit einem Peak, vorzugsweise einem unimodalen Peak, auf. Die differentielle Porenverteilung ergibt sich durch das spezifische Volumen der Pore (mm³/g) in Abhängigkeit von der Porengröße der Pore (µm) und wird beispielsweise mit der Hilfe der Quecksilberintrusion gemessen. Die Quecksilberintrusion wird gemäß DIN 66133 durchgeführt. Als Ergebnis der Quecksilberintrusionsmessung erhält man das Porenvolumen bezogen auf das Gesamtgewicht des untersuchten Probenkörpers für die jeweilige Porengröße. Die differentielle Porenverteilung stellt somit das spezifische Porenvolumen bei der jeweiligen Porengröße da. Das spezifische Porenvolumen gibt das Porenvolumen bei der angegebene Porengröße bezogen auf das Gesamtgewicht des untersuchten Probenkörpers an. Die Position des Maximums des Peaks der differentiellen Porenverteilung gibt die am häufigsten vorkommende Porengröße an.

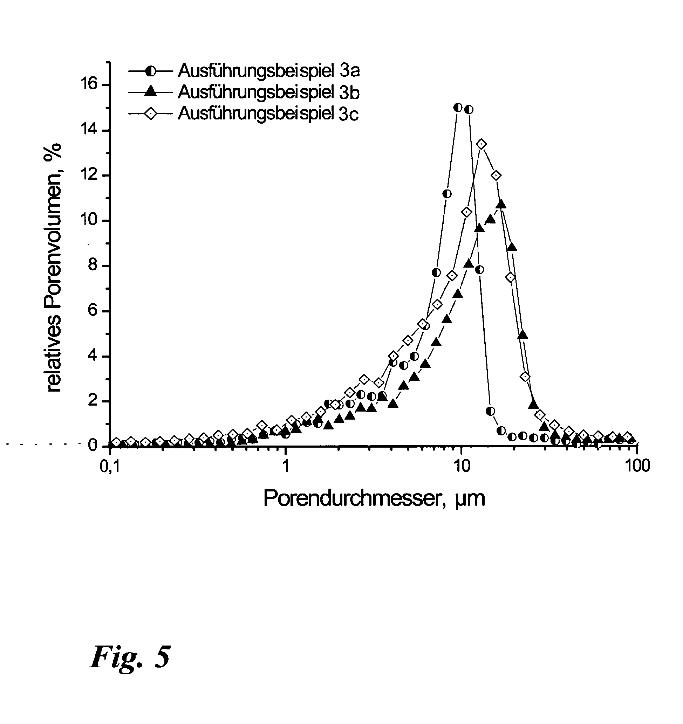

Vorzugsweise weist der poröse β-SiC-haltige Formkörper eine differentielle Porenverteilung mit einem unimodalen Peak mit einem Maximum im Bereich von 1 bis 25 µm auf. Vorzugsweise beträgt die Breite dieses Peaks bei seiner halben Höhe maximal das 1,5-fache der häufigsten Porengröße. Weiter bevorzugt ist die Breite des Peaks bei seiner halben Höhe so groß wie die häufigste Porengröße und besonders bevorzugt maximal 80% der häufigsten Porengröße (vgl. Figur 5).

Beispielsweise beträgt die Breite eines Peaks, der ein Maximum bei einer Porengröße von 4 µm aufweist, bei seiner halben Höhe maximal 6 µm (1,5fache der häufigsten Porengröße), wobei die Breite des Peaks der Differenz zwischen dem größeren und dem kleineren Porendurchmesser bei der halben Höhe des Peaks entspricht.

Vorzugsweise besteht das in dem erfindungsgemäßen porösen β-SiC-haltige Formkörper enthaltenen β-SiC zu 90 Gew.-%, vorzugsweise zu 95 %, weiter bevorzugt zu 98 Gew.-% besonders bevorzugt zu 100 Gew.-% aus β-SiC (kubische Kristallform des SiC). Diese Wertangaben beziehen sich auf Si ohne Legierungselemente.

Der poröse β-SiC-haltige Formkörper weist ein dreidimensionales, durchgehendes β-SiC-Gerüst auf, welches vorzugsweise β-SiC-Kristalle mit einer Korngröße zwischen 0,1 µm und 100 µm, besonders bevorzugt zwischen 0,1 µm und 10 µm, umfasst. Bei einer Ausführungsform weist das dreidimensionale durchgehende SiC-Gerüst im wesentlich keine Korngrenzen, vorzugsweise keine Korngrenzen auf.

Vorzugsweise weist das poröse β-SiC-Gerüst des erfindungsgemäßen porösen β-SiC-Formkörpers einen Restgehalt an nicht umgesetzten Silizium bzw. Silizium-Aluminium-Legierung auf, der vorzugsweise maximal 20 Gew.-%, weiter bevorzugt maximal 10 Gew.-%, besonders bevorzugt maximal 5 Gew.-%, jeweils bezogen auf das Gesamtgewicht des porösen Formkörpers ausmacht.

Vorzugsweise weist das poröse β-SiC-Gerüst des erfindungsgemäßen porösen β-SiC-Formkörpers einen Restgehalt an freiem, nicht umgesetzten Kohlenstoff auf, der vorzugsweise maximal 5 Gew.-% bezogen auf das Gesamtgewicht des porösen Formkörpers ausmacht. Bei einer bevorzugten Ausführungsform umfasst der freie nicht umgesetzte Kohlenstoff Kohlenstofffasern.

Der erfindungsgemäße poröse β-SiC-haltige keramische Formkörper weist eine poröse Matrix auf, die SiC, SiC/C, Si/SiC und/oder Si/SiC/C umfasst oder daraus besteht. Vorzugsweise ist die poröse Matrix hochporös. Die Matrix des erfindungsgemäßen Formkörpers eignet sich Katalysatorträger und/oder Dieselrußpartikelfilter.

Durch das erfindungsgemäße Verfahren lassen sich insbesondere Partikelfilter, besonders bevorzugt Dieselrußpartikelfilter, herstellen.

Bei einer Ausführungsform ist der β-SiC-haltige keramische Formkörper ein Partikelfilter, insbesondere ein Dieselrußpartikelfilter.

Vorzugsweise weist der β-SiC-haltige keramische Formkörper eine Kanäle-haltige Struktur auf. Vorzugsweise weist die Kanäle-haltige Struktur eine Kanaldichte von 50 bis 400 Kanälen/inch², weiter bevorzugt von 180 bis 350 Kanälen /inch², besonders bevorzugt von 200 bis 300 Kanälen /inch², auf. Vorzugsweise weisen die Kanalwände eine Stärke in einem Bereich von 50 µm bis 480 µm, vorzugsweise 50 bis 280 µm, bevorzugt 150 bis 280 µm, noch weiter bevorzugt 200 bis 250 µm, auf.

Bei einer Ausführungsform erstrecken sich die Kanäle im Wesentlichen parallel zueinander. Bei einer Ausführungsform erstrecken sich die Kanäle im Wesentlichen parallel zueinander entlang des Längsachse des keramischen Formkörpers.

Bei einer bevorzugten Ausführungsform enthält die Skelettstruktur des Formkörpers kein SiO₂.

Bei einer Ausführungsform umfasst der β-SiC-haltige Formkörper 0 bis 5 Gew.-%, vorzugsweise von 0 bis 3 Gew.-% Kohlenstoff, am meisten bevorzugt keinen Kohlenstoff, bezogen auf das Gesamtgewicht des β-SiC-haltigen Formkörpers. Vorzugsweise umfasst der β-SiC-haltige Formkörper 0 bis 10 Gew.-%, vorzugsweise 0 bis 5 Gew.-%, Silizium, am meisten bevorzugt kein Silizium, bezogen auf das Gesamtgewicht des β-SiC-haltigen Formkörpers.

Gemäß einer bevorzugten Weiterbildung umfasst der β-SiC-haltige Formkörper
0 bis 5 Gew.-%, vorzugsweise von 0 bis 3 Gew.-%, Kohlenstoff,
60 bis 95 Gew.%, vorzugsweise 60 bis 70 Gew.-%, β-SiC,
0 bis 10 Gew.-%, vorzugsweise 0 bis 5 Gew.-%, Si,
1 bis 30 Gew.-%, vorzugsweise 5 bis 20 Gew.-%, Al,
wobei sich die Angaben in Gew.-% jeweils auf das Gesamtgewicht des β-SiC-haltigen Formkörpers beziehen und sich unter Berücksichtigung etwaiger weiterer Komponenten auf 100 Gew.-% addieren.

Der poröse β-SiC-Formkörper umfasst vorzugsweise ein dreidimensionales, durchgehendes, β-SiC-Gerüst. Das β-SiC-Gerüst, vorzugsweise das dreidimensionale β-SiC-Gerüst, ist bevorzugt mit einer Aluminiumoxidschicht an der Oberfläche der offenen Poren und Kanäle ummantelt. Bei einer weiteren Ausführungsform ist die Oberfläche der offenen Poren und Kanäle des β-SiC-Gerüsts mit einer Aluminiumschicht bedeckt, die auf der dem β-SiC-Gerüst abgewandten Seite eine Aluminiumoxidschicht aufweist.

Unter "dreidimensionalem, durchgehendem β-SiC-Gerüst" im Sinne der Erfindung ist eine β-SiC-Struktur zu verstehen, die reaktionsgebundene β-SiC umfasst, welches ohne weitere Bindemittel eine feste Struktur ausbildet. Bei einer weiteren Ausführungsform weist die dreidimensionale, durchgehende β-SiC-Struktur im Wesentlichen keine Korngrenzen, vorzugsweise keine Korngrenzen auf. Bei einer Ausführungsform ist die dreidimensionale, durchgehende β-SiC-Struktur nicht aus SiC-Teilchen aufgebaut.

Bei herkömmlichen SiC-Strukturen wird das SiC-Gerüst über ein Bindemittel, beispielsweise geschmolzenes Silizium oder eine Oxidkeramik gebunden. Der große Vorteil eines durchgehenden SiC-Gerüstes ist, dass der Formkörper wesentlich stabiler und beständiger gegenüber aggressiven Medien, wie beispielsweise Autoabgasen, ist. Bei herkömmlichen SiC-Strukturen, bei denen das SiC-Gerüst über Bindemittel gebunden ist, erfolgt über die Zeit ein Abbau des Bindemittels beispielsweise durch Oxidation, wodurch der Formkörper zerstört wird. Den Erfindern ist es somit überraschenderweise gelungen einen bereitzustellen, der eine überragende chemische und mechanische Beständigkeit aufweist. Ferner weist der poröse β-SiC-Formkörper ein hervorragendes Haftvermögen für Katalysatoren auf

Gemäß einer weiteren Ausführungsform ist der β-SiC-haltige Formkörper faserverstärkt. Die Fasern, vorzugsweise Kohlenstofffasern (beispielsweise carbonisiertes PAN (Polyacrylnitril) oder Pechfasern) und/oder Kurzfasern aus β-SiC (Whisker) werden bereits in die zu extrudierende Masse bei der Herstellung des Kohlenstoff-haltigen Formkörpers eingebracht und bewirken eine Festigkeitssteigerung des Formkörpers. Die β-SiC-Kurzfasern bewirken eine rein mechanische Festigkeitssteigerung. Der Gehalt der β-SiC-Kurzfasern wird so gewählt, dass die sich neu bildende β-SiC-Struktur dadurch nicht beeinträchtigt wird. Die Kohlenstofffasern bewirken hingegen eine deutliche Verbesserung der Thermoschocksstabilität. Das Silizium bzw. die Siliziumlegierung setzt sich primär mit den Partikeln der Kohlenstoffpartikel zu β-SiC um und ummantelt die Kohlenstofffasern, wodurch diese von außen nur oberflächlich siliziert werden. Durch diese Ummantelung werden die Kohlenstofffasern vor eventuell auftretenden oxidierenden Bedingungen geschützt.

Bei einer Ausführungsform weist der β-SiC-haltige Formkörper gerichtete Porenstrukturen auf. Durch die Verwendung von Natur- und/oder Polymerfasern können in dem Formkörper gerichtete Porenstrukturen erzeugt werden. Die Fasern werden bei der vorzugsweise durchgeführten Pyrolyse pyrolysiert. Dadurch werden in dem Kohlenstoff-haltigen Formkörper, vorzugsweise lineare oder gerichtete, Poren mit definiertem Porendurchmesser erzeugt, die nach der Silizierung in dem β-SiC-haltigen keramischen Formkörper enthalten sind. Über den Durchmesser der verwendeten Fasern lässt sich der Durchmesser der gerichteten Poren einstellen. Vorzugsweise liegt die Länge der Natur- und/oder Polymerfasern in einem Bereich von 100 bis 500 µm. Die durch die Pyrolyse entstehenden Poren haben vorzugsweise eine Länge von 50 bis 500µm. Vorzugsweise liegt der Durchmesser der gerichteten oder linearen Poren in einem Bereich von 5 bis 50 µm, weiter bevorzugt von 8 bis 25 µm. Die Einstellung eines definierten Porendurchmessers ermöglicht äußerst vorteilhaft die Bereitstellung von Filtern mit definierten Filtereigenschaften. Die definierte Porengröße der gerichteten Poren kann so eingestellt werden, dass beispielsweise die Trennung eines Partikelgemisches in verschiedene Partikel mit verschiedenen Größen möglich ist.

Gemäß einer bevorzugten Ausführungsform ist der β-SiC-haltige Formkörper ein Katalysatorträger und/oder ein Dieselrußpartikelfilter. Vorzugsweise besteht der Katalysatorträger aus mehreren Teilen, die durch einen Klebstoff verbindbar oder verbunden sind. Besonders bevorzugt ist der Klebstoff ein keramischer Feuerfestkleber, der durch Zumischung von thermisch hochleitfähigem Material eine Wärmeleitfähigkeit von mehr als 10 W/mK aufweist. Unter dem Begriff "Feuerfestkleber" im Sinne der Erfindung wird eine Masse auf keramischer Basis verstanden, die chemisch oder hydraulisch aushärtet und bis mindestens 1000°C, vorzugsweise bis 1600°C, temperaturbeständig ist.

Der β-SiC-haltige Formkörper weist vorzugsweise eine quaderförmige oder zylindrische Formgebung auf. Die Formkörper können auch einen polygonalen Querschnitt, beispielsweise hexagonalen oder oktogonalen Querschnitt, aufweisen. Vorzugsweise weisen die β-SiC-haltige Formkörper sich entlang der Längsachse des Formkörpers erstreckende Kanäle auf, die wesentlichen parallel zueinander angeordnet sind.

Gemäß einer bevorzugten Variante sind die Kanäle nicht durchgehend. Die Kanäle sind bei dieser Variante vorzugsweise wechselseitig verschlossen. Das heißt, die im Wesentlichen parallel zueinander liegenden Kanäle sind abwechselnd an ihrem einen oder anderen Ende verschlossen. Dies ermöglicht die Verwendung eines solchen β-SiC-haltigen keramischen Formkörpers als Filter, wobei das zu filtrierende Medium durch die Wandung von einem Kanal in den Nachbarkanal übertritt und die partikulären Verunreinigungen zurückgehalten werden. Die Oberfläche der Kanäle und Poren ist bei dem erfindungsgemäßen β-SiC-haltige Formkörper mit einer Alumiumoxidschicht versehen. Dies ermöglicht vorteilhafter Weise den kombinierten Einsatz als Filter und Katalysatorträger.

Die der Erfindung zugrunde liegende Aufgabe wird des Weiteren durch ein Katalysatorsystem gelöst, das einen porösen β-SiC-haltigen keramischen Formkörper nach einem der Ansprüche 13 bis 21 enthält.

Der erfindungsgemäße Formkörper eignet sich beispielsweise zur Verwendung in einem Filtersystem, insbesondere einem Dieselrußpartikelfilter.

Der poröse β-SiC-haltige keramische Formkörper gemäß der vorliegenden Erfindung kann auch als Katalysatorträgerstruktur sowie entsprechenden Katalysatorsystemen verwendet werden.

Das Katalysatorsystem kann beispielsweise ein Abgassystem eines Kraftfahrzeuges oder eine Abgasbehandlungsanlage eines Verbrennungsmotors sein, in dem der poröse β-SiC-haltige keramische Formkörper angeordnet ist.

Das erfindungsgemäße Verfahren ermöglicht somit die Bereitstellung eines β-SiC-Formkörpers bei dem bei der Herstellung der Energieaufwand geringer ist und der Verschleiß bzw. der Abrieb an den Formwerkzeugen verringert wird. Ferner weist der erfindungsgemäße poröse β-SiC-Formkörper eine sehr gleichmäßige Oberfläche und gute Haftungseigenschaften für Katalysatoren auf.

Erfindungsgemäß wird ein Formkörper erhalten, der als effektiver Katalysatorträger und/oder Dieselrußpartikelfilter hervorragend geeignet ist.

### Figuren

Figur 1 zeigt das ternäre Al-Si-C-Phasendiagramm.
Figur 2 zeigt die Legierungsbildung der Silizium-Aluminium-Schmelze während der Pyrolyse und der Silizierung für eine Zusammensetzung von 90 Atom-% Si und 10 Atom-% Al.
Figur 3 beschreibt das Gehaltsdreieck eines ternären Phasendiagramms. A, B, und C seien die Komponenten einer Legierung mit den Gehalten X_{A}, X_{B}, X_{C}. Für jeden Punkt in dem gleichseitigen Dreieck ist die Summe der drei Abstände von den Seiten gleich der Höhe des Dreiecks. Die Höhe des Dreiecks setzt man gleich 100 % und berechnet aus den drei Abständen die Gehalte.
Figur 4 zeigt XRD-Diagramme der Ausführungsbeispiele 3a (Figur 4A) und 3b (Figur 4B) für die Silizierung bei 1250 °C und bei 1350 °C.
Figur 5 zeigt die Porengrößenverteilungen der bei 1350 °C silizierten Wabenkörpern aus den Beispielen 3a und 3b sowie für die Wabe aus Ausführungsbeispiel 3c.
Figur 6 zeigt die REM-Aufnahme eines Schliffes einer Wabe aus Ausführungsbeispiel 3b, die bei 1350°C siliziert wurde.
Figur 7 zeigt von einer Bildeinstellung im REM ein Elementmapping für das Ausführungsbeispiel 3b, siliziert bei 1350°C.
Figur 8 zeigt das XRD-Diagramm von Ausführungsbeispiel 3c zu sehen.
Figur 9 zeigt das Ergebnis des Elementmappings für Ausführungsbeispiel 3c.

Durch die nachfolgenden Beispiele soll die vorliegende Erfindung näher erläutert, aber in keiner Weise beschränkt werden.

### Beispiele

### Beispiel 1

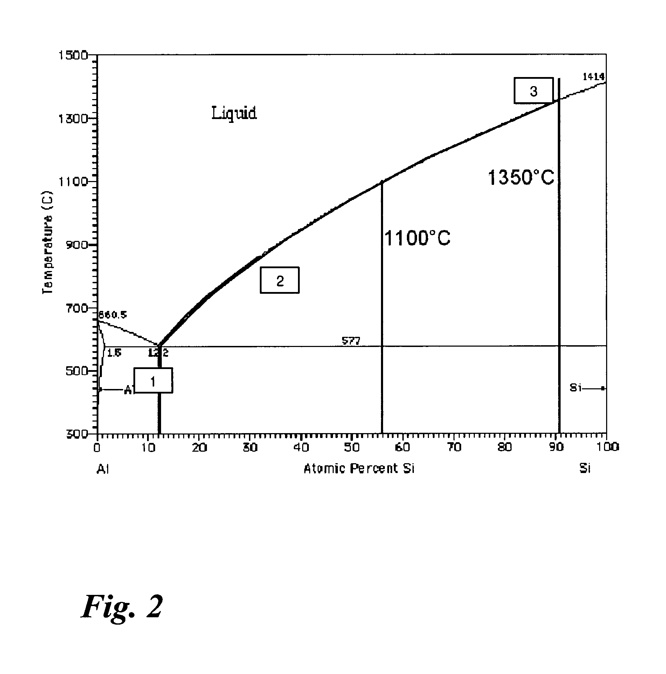

Der Schmelzpunkt von Aluminium liegt etwa bei 660 °C. Der Schmelzpunkt von Silizium liegt etwa bei 1412°C. Figur 2 zeigt für eine Zusammensetzung mit 90 Atom-% Si und 10 Atom-% Al die Legierungsbildung von Aluminium und Silizium bei verschiedenen Temperaturen während der Pyrolyse und Silizierung.

Während des ersten Temperaturprozesses (Pyrolyse) bildet sich ab 577°C (Eutektischer Punkt) an den Kontaktstellen Al-Si eine eutektische Schmelze mit der Zusammensetzung 12,2 at.-% Si und 87,8 at.-% Al (Punkt 1 im Diagramm). Wird die Temperatur weiter erhöht, so verarmt die Schmelze zunehmend an Al, da sich zusätzlich Silizium löst. Bei 850°C (maximale Temperatur während der Pyrolyse im Beispiel 1, Punkt 2 im Diagramm) liegt theoretisch eine Schmelzzusammensetzung von ca. 33 at.-% Si und 67 at.-% Al vor. Der Anteil an Si in der Schmelze ist jedoch viel zu gering um eine SiC-Bildung zu ermöglichen. Während der Silizierung wird die Temperatur bis maximal 1450°C erhöht. Der Anteil an Silizium in der Legierung erhöht sich mit zunehmender Temperatur zunehmend. Am Punkt 3 im Diagramm besitzt die Schmelze theoretisch eine Zusammensetzung von 90 at.-% Si und 10 at.-% Al, diese Zusammensetzung entspricht auch genau dem Verhältnis von Aluminium und Silizium, das für die Ausgangsmasse angesetzt wurde. Somit liegt das komplette Al und Si im schmelzflüssigen Zustand vor. Der Siliziumanteil der Schmelze ist nun hoch genug, um die Silizierung zu ermöglichen. Während der Silizierung verarmt die Legierung durch die SiC-Bildung zunehmend.

### Beispiel 2

In Figur 1 und Tabelle 1 ist das ternäre Al-Si-C- Phasendiagramm und sechs mögliche Legierungszusammensetzungen dargestellt. Tabelle 1 gibt die Anteile in Atom-% an, Tabelle 2 diejenigen in Gewichts-%. Falls exakt diese Anteile eingestellt werden, werden die jeweiligen Schmelzpunkte der Legierungen und damit die entsprechenden Silizierpunkte erreicht. Die Zusammensetzungen dieser Legierungen befinden sich innerhalb des Dreiecks Si-SiC-Al, an der Verbindungslinie Al-SiC. Um die Bildung des Carbids Al₄SiC₄ zu vermeiden soll diese Verbindungslinie nicht in Richtung Dreieck SiC-Al₄SiC₄-Al überschritten werden. Würde sich ein solches Karbid bilden, so sinkt die mechanische Festigkeit des Filters stark und die Verteilung der Aluminiumschicht wird weniger gleichmäßig. Deswegen liegen die gewählten Anteile in den Tabellen 1 und 2 auch knapp oberhalb dieser Linie Al-SiC.

**Tabelle 1: Zusammensetzung der möglichen AlSiC-Legierungen in at.%**

| | AL | Si | C |
|---|---|---|---|
| 1100°C | 28,1 | 36,5 | 35,4 |
| 1150°C | 22,9 | 38,5 | 38,3 |
| 1200°C | 18,5 | 41,0 | 40,5 |
| 1250°C | 14,0 | 43,2 | 42,8 |
| 1300°C | 10,3 | 45,1 | 44,6 |
| 1350°C | 5,2 | 47,6 | 47,2 |

**Tabelle 2: Zusammensetzung der möglichen AlSiC-Legierungen in Gewichts-%**

| | Al | Si | C |
|---|---|---|---|
| 1100°C | 34,33% | 46,42% | 19,25% |
| 1150°C | 28,61% | 50,08% | 21,30% |
| 1200°C | 23,35% | 53,89% | 22,76% |
| 1250°C | 17,94% | 57,64% | 24,42% |
| 1300°C | 13,36% | 60,90% | 25,75% |
| 1350°C | 6,86% | 65,41% | 27,73% |

### Beispiel 3

Aus der Ausgangsmasse wurde ein Wabenkörper mit 200cpsi durch Extrusion hergestellt, getrocknet und bei 850°C pyrolysiert. Anschließend wurde der pyrolysierte Körper unter einer Argonatmosphäre auf 1250°C oder 1350 °C aufgeheizt und 1 Stunde bei dieser Temperatur gehalten.

### Ausführungsbeispiel 3a

| Zusammensetzung der Ausgangsmasse (in Masse-%): | |
|---|---|
| Aktivkohle 0-40µm | **5,2%** |
| Phenolharz | **15,4%** |
| Siliziumpulver 0-75µm | **33,8%** |
| Aluminiumpulver 0-50µm | |
| Flakes mit 4µm Dicke | **14,4%** |
| Celluloseether | **2%** |
| Wasser | **21%** |
| Gleithilfsmittel | **6%** |
| Plastifizierer | **1%** |
| Seife | **1.2%** |

| Zusammensetzung nach Pyrolyse: | |
|---|---|
| Aktivkohle | 8,28% |
| Glaskohlenstoff | 14,73% |
| Silizium | 53,99% |
| Aluminium | 23,00% |

Der Schmelzpunkt der Legierung aus dem Silizium und dem Aluminium liegt bei 1200°C.

### Ausführungsbeispiel 3b

Aus der Ausgangsmasse wurde ein Wabenkörper mit 200cpsi durch Extrusion hergestellt, getrocknet und bei 850°C pyrolysiert. Anschließend wurden die pyrolysierten Körper unter einer Argonatmosphäre auf 1250°C oder 1350 °C aufgeheizt und 1 Stunde bei dieser Temperatur gehalten.

| Zusammensetzung der Ausgangsmasse (in Masse-%): | |
|---|---|
| Aktivkohle 0-40µm | **6,7%** |
| Phenolharz | **14,4%** |
| Siliziumpulver 0-75µm | **35,7%** |
| Aluminiumpulver 0-50µm | |
| Flakes mit Dicke 4µm | **7,6%** |
| Celluloseether | **2%** |
| Wasser | **24%** |
| Gleithilfsmittel | **7%** |
| Plastifizierer | **1%** |
| Seife | **1.6%** |

| Zusammensetzung nach Pyrolyse: | |
|---|---|
| Aktivkohle | 11,32% |
| Glaskohlenstoff | 14,67% |
| Silizium | 61,01% |
| Aluminium | 13,00% |

Der Schmelzpunkt der Legierung aus dem Silizium und dem Aluminium liegt bei 1300°C.

### Ausführungsbeispiel 3c

Aus der Ausgangsmasse wurde ein Wabenkörper mit 200cpsi durch Extrusion hergestellt, getrocknet und bei 850°C pyrolysiert. Anschließend wurde der pyrolysierte Körper unter einer Argonatmosphäre auf 1350°C aufgeheizt und 1 Stunde bei dieser Temperatur gehalten.

| Zusammensetzung der Ausgangsmasse (in Masse-%): | |
|---|---|
| Aktivkohle 0-40µm | **6,7%** |
| Phenolharz | **14,4%** |
| Siliziumpulver 0-75µm | **35,7%** |
| Aluminiumpulver 0-50µm | |
| Flakes mit Dicke 4µm | **7,6%** |
| Celluloseether | **2%** |
| Titanhydrid 0 -63µm | **0,5%** |
| Wasser | **23%** |
| Gleithilfsmittel | **7,5%** |
| Plastifizierer | **1%** |
| Seife | **1.6%** |

| Zusammensetzung nach Pyrolyse: | |
|---|---|
| Aktivkohle | 11,29% |
| Glaskohlenstoff | 14,52% |
| Silizium | 60,50% |
| Aluminium | 12,91% |
| Titan | 0,81% |

Der Schmelzpunkt der Legierung aus dem Silizium und dem Aluminium liegt bei 1300°C.

Aus der Ausgangsmasse wurde ein Wabenkörper mit 200cpsi durch Extrusion hergestellt, getrocknet und bei 850°C pyrolysiert. Anschließend wurde der pyrolysierte Körper unter einer Argonatmosphäre auf 1350°C aufgeheizt und 1 Stunde bei dieser Temperatur gehalten.

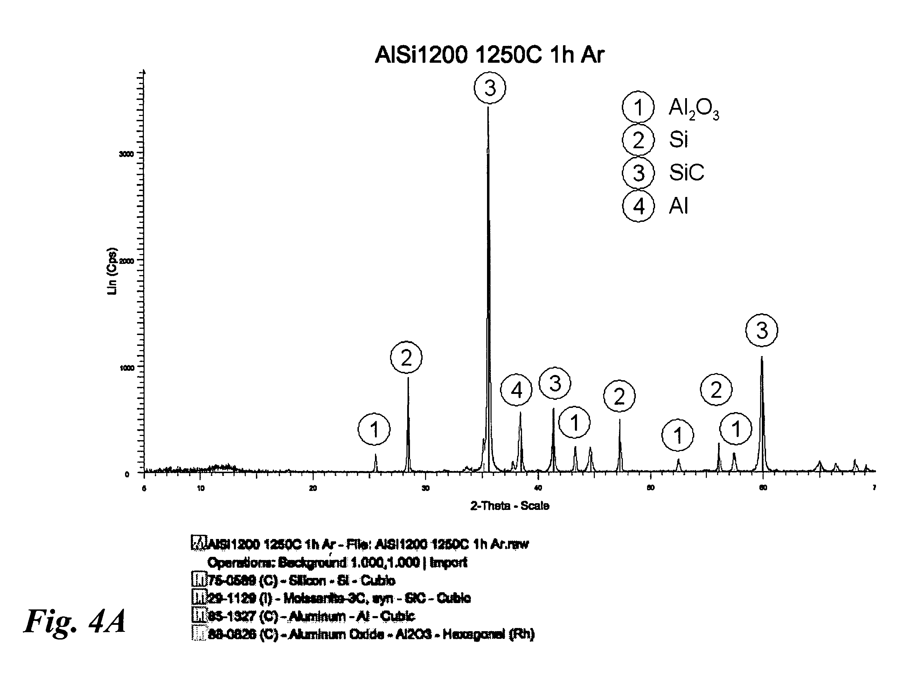

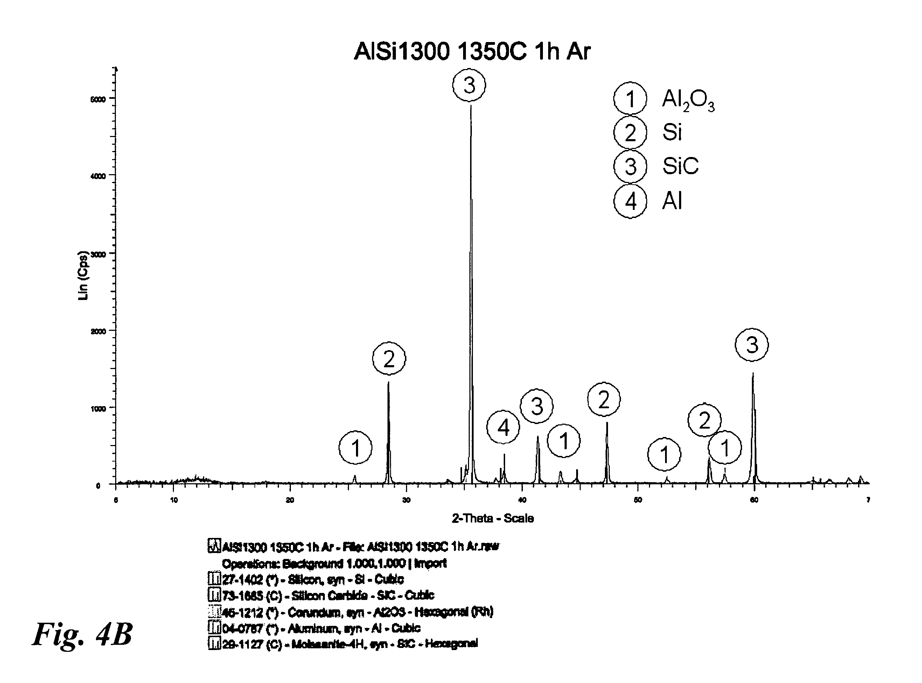

In Figur 4 sind die XRD-Diagramme der Ausführungsbeispiele 3a (Figur 4A) und 3b (Figur 4B) dargestellt, und zwar einmal für den Silizierversuch bei 1250°C und einmal für den Versuch bei 1350°C. Man kann deutlich erkennen, dass selbst bei 1250°C bereits eine deutliche Umsetzung zu SiC stattgefunden hat. In Figur 5 sind die Porengrößenverteilungen der bei 1350°C silizierten Wabenkörper aus den Beispielen 3a und 3b sowie die der Wabe aus Ausführungsbeispiel 3c zu sehen. In allen Fällen hat sich ein poröses SiC-Gerüst gebildet, wobei sich im Falle des höheren Aluminiumanteils bei 3a eine deutlich kleinere mittlere Porengröße eingestellt hat.

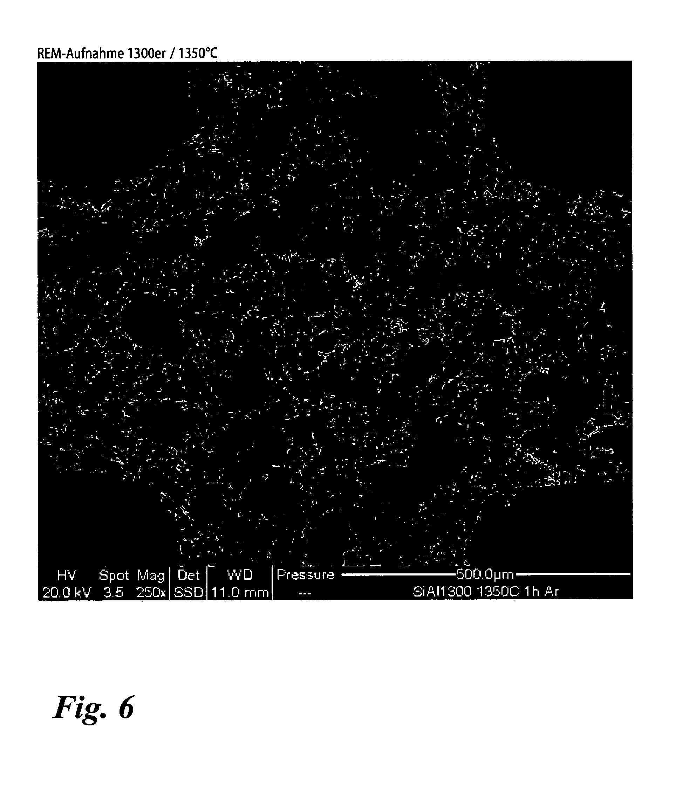

Figur 6 zeigt die REM-Aufnahme eines Schliffes einer Wabe aus Ausführungsbeispiel 3b, die bei 1350°C siliziert wurde. Es ist sehr gut die hohe Porosität der Struktur erkennbar.

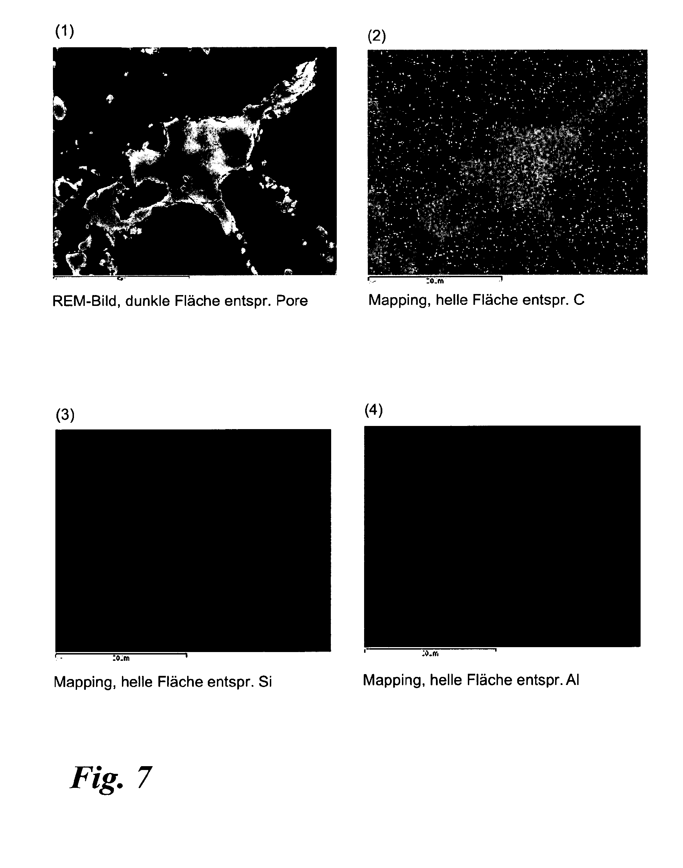

Zur Darstellung der einzelnen Elemente in der Struktur wurde von einer Bildeinstellung im REM ein Elementmapping (Erläuterung siehe Beispiel 4) durchgeführt. Das Ergebnis für Ausführungsbeispiel 3b, siliziert bei 1350°C, ist in Figur 7 dargestellt. Zu sehen sind das eigentliche Bild (1), sowie das Mapping für Kohlenstoff (2), Silizium (3) und Aluminium (4). Bei den Darstellungen (2) bis (4) stellen die hellen Bereiche die mit hoher Konzentration des betreffenden Elementes dar. Die Bilder (2) und (3) zeigen die Lage des SiC und Bild (4) die Verteilung des Aluminiums darauf. Das Aluminium ist eindeutig punktuell und nicht gleichmäßig verteilt.

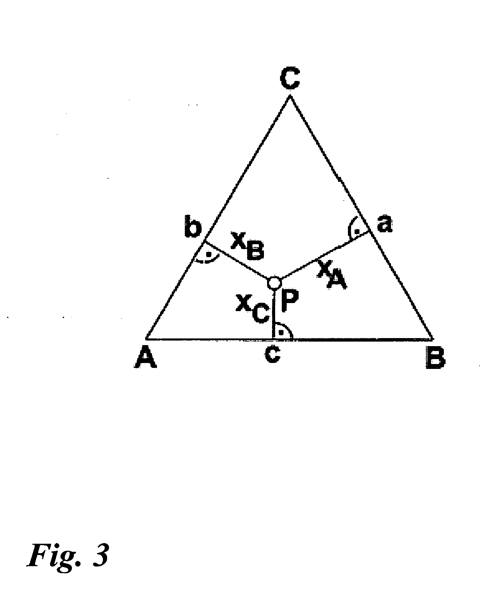

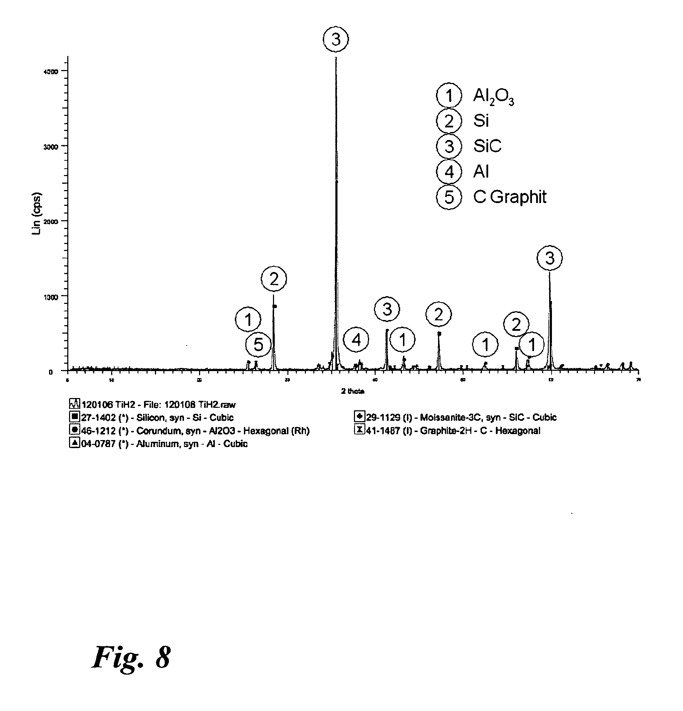

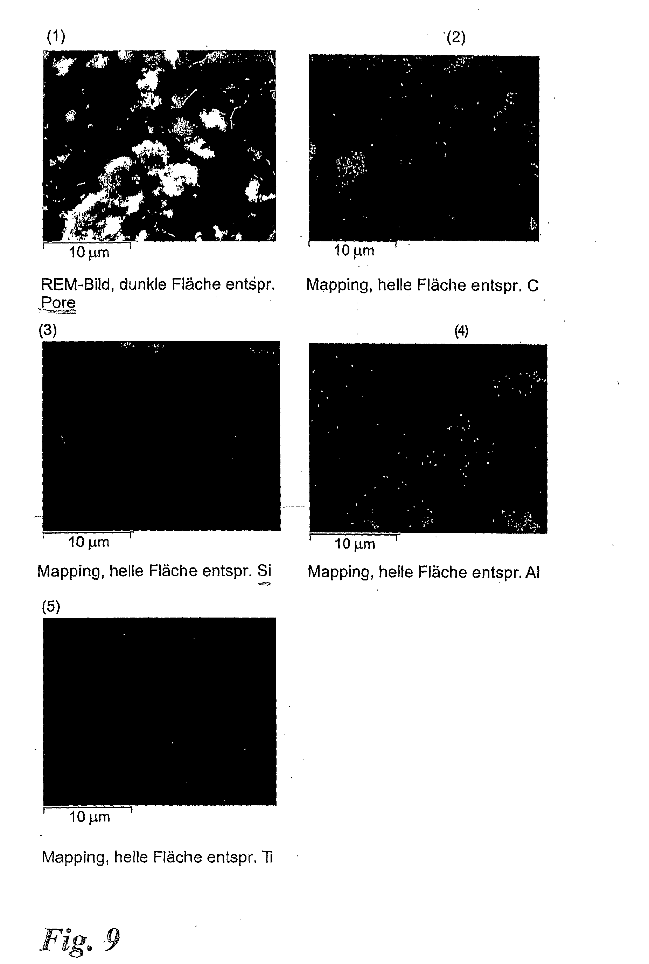

In Figur 8 ist das XRD-Diagramm von Ausführungsbeispiel 3c zu sehen. Man kann keinen signifikanten Unterschied in der Umsetzung zum SiC zu Ausführungsbeispiel 3b feststellen. Die zugehörige Porenverteilung ist mit in Figur 3b dargestellt. Es zeigt sich ein ähnlicher Verlauf wie bei Beispiel 3b. Figur 9 zeigt das Ergebnis des Elementmapping für Ausführungsbeispiel 3c. Hier ist die deutlich gleichmäßige Verteilung des Aluminiums über die SiC-Oberfläche zu erkennen.

### Beispiel 4 (Element Mapping mittels Energie-Dispersiver-Röntgenstrahlung (EDX))

Im Rasterelektronenmikroskop wird die zu untersuchende Probe mit sehr fein gebündelten monoenergetischen Elektronen beschossen. Diese Elektronen dringen zum Teil tief in die Probe ein und können mit den Hüllenelektronen von Atomen in tieferen Lagen der Probe (bis einige Mikrometer) in Wechselwirkung treten. Dadurch können unterschiedliche Prozesse ausgelöst werden. Ein auftretender Effekt ist, dass die Elektronen Röntgenstrahlung auslösen. Dabei unterscheidet man die (hier nicht interessierende) Röntgenbremsstrahlung und die Charakteristische Röntgenstrahlung. Bei letzterer ist die Energie der Strahlung charakteristisch für das Atom, aus dem das Röntgenquant emittiert wurde. Separiert man die Röntgenstrahlen mit einem Energie - Spektrometer und misst ihre Intensität bei den jeweiligen Energien, so liefert jeweils die Strahlungsenergie das Indiz für die Atomart und die Intensität ein Maß für die Konzentration, mit der die Atomart in der analysierten Probenschicht einige Mikrometer Dicke vertreten ist.

Man erhält also:
Qualitativ: Art der Elemente und ortsaufgelöste Verteilung in der Probe
Quantitativ: Konzentration der Elemente

Im vorliegenden Fall des Element Mappings, wird ein REM-Bildausschnitt mittels EDX analysiert und für jedes einzelne auftretende Element ein eigenes Bild dargestellt. Auf jedem Bild wird das spezifische Element eingefärbt. Somit erhält man eine Übersicht der auftretenden Elemente mit deren Verteilungen.

## Patentansprüche

1. Verfahren zur Herstellung eines porösen β-SiC-haltigen keramischen Formkörpers mit einem dreidimensionalen durchgehenden β-SiC-Gerüst, welches im wesentlichen Keine Korngrenzen Aufweist,
**dadurch gekennzeichnet,**
**dass** das Verfahren die folgenden Schritte umfasst:
(a) Extrudieren eines Formkörpers aus einer Masse, die Silizium-haltige Partikel, Aluminium-haltige-Partikel, Kohlenstoff-haltige Partikel und ein verkokbares, organisches Bindemittel umfasst, und
(b) Pyrolysieren des in Schritt (a) bereitgestellten porösen Formkörpers bei einer Temperatur von 600 bis 1000°C.
(c) Silizieren des porösen Formkörpers durch Erhitzen auf eine Temperatur in einem Bereich von 1100 bis 1500°C unter Erhalt des porösen β-SiC-haltigen Formkörpers, welcher an der Oberfläche der offenen Poren und Kanäle, eine Aluminiumschicht aufweist, und
(d) Oxidation der Aluminiumschicht aus Schritt (c) unter Erhalt einer Aluminiumoxidschicht.

2. Verfahren nach Anspruch 1,
**dadurch gekennzeichnet,**
**dass** die Aluminium-haltigen-Partikel plättchenförmig sind.

3. Verfahren nach Anspruch 2,
**dadurch gekennzeichnet,**
**dass** Verhältnis von Durchmesser zu Dicke der Aluminiumplättchen bei mindestens 4 liegt.

4. Verfahren nach Anspruch 2 oder 3,
**dadurch gekennzeichnet,**
**dass** die plättchenförmigen Aluminium-haltigen Partikel eine Dicke in einem Bereich von 0,01 bis 14 µm und einen mittlerem Teilchendurchmesser in einem Bereich von 0,1 bis 70 µm aufweisen.

5. Verfahren nach einem der vorhergehenden Ansprüche,
**dadurch gekennzeichnet,**
**dass** das Mischungsverhältnis der Masse in Schritt (a) von Silizium-haltigen, Aluminium-haltigen und Kohlenstoff-haltigen Teilchen so gewählt wird, dass kein Aluminiumcarbid und/oder Aluminiumsiliziumcarbid gebildet wird.

6. Verfahren nach einem der vorhergehenden Ansprüche,
**dadurch gekennzeichnet,**
**dass** der Sillziumgehalt In einem Bereich von 50 bis 55 Atomprozent, bezogen auf die Menge von Silizium und Kohlenstoff, liegt.

7. Verfahren nach einem der vorhergehenden Ansprüche,
**dadurch gekennzeichnet**,
die Menge an Aluminium bezogen auf das Gewicht des pyrolysierten Körpers in einem Bereich von 1 bis 35 Gew. % liegt.

8. Verfahren nach einem der vorhergehenden Ansprüche,
**dadurch gekennzeichnet,**
**dass** die Aluminium-haltigen Partikel mit einer Schutzschicht überzogen sind.

9. Verfahren nach einem der vorhergehenden Ansprüche,
**dadurch gekennzeichnet,**
**dass** der Formkörper in eine Kanäle-haltige Struktur mit einer Kanaldichte von 50 bis 400 Kanäle/inch2 und Kanalwänden mit einer Stärke in einem Bereich von 50 µm bis 480 µm extrudiert wird.

10. Verfahren nach einem der vorhergehenden Ansprüche,
**dadurch gekennzeichnet,**
**dass** die in Schritt (a) extrudierte Masse ferner Titan, eine Titanverbindung und/oder eine Titanlegierung enthält.

11. Verfahren Anspruch 10,
**dadurch gekennzeichnet,**
**dass** der Anteil von Titan 2 bis 20 Gew.-%, bezogen auf die Menge des Aluminiums beträgt.

12. Verfahren nach einem der vorhergehenden Ansprüche
**dadurch gekennzeichnet,**
**dass** auf die Aluminiumoxidschicht eine Katalysatorschicht aufgebracht wird.

13. Poröser β-SiC-haltiger keramischer Formkörper,
**dadurch gekennzeichnet,**
**dass** der poröse β-SiC-haltige Formkörper ein dreidimensionales, durchgehendes β-SiC-Gerüst aufweist, welches im wesentlichen Keine Korngrenzen Aufweist, und
der poröse β-SiC-haltige keramische Formkörper Poren mit einer mittleren Porengröße im Bereich von 0,1 µm bis 50 µm und eine Aluminiumoxidschicht an der Oberfläche der offenen Poren und Kanäle aufweist.

14. Poröser β-SiC-haltiger keramischer Formkörper nach Anspruch 13,
**dadurch gekennzeichnet,**
**dass** 55% bis 70% der Oberfläche der offenen Poren und Kanäle durchgehend mit der Aluminiumoxidschicht bedeckt sind.

15. Poröser β-SiC-haltiger keramischer Formkörper nach Anspruch 13 oder 14,
**dadurch gekennzeichnet,**
**dass** der poröse β-SiC-haltige keramische Formkörper 0 bis 10 Gew.-% Silizium umfasst, bezogen auf das Gesamtgewicht des β-SiC-haltigen Formkörpers.

16. Poröser β-SiC-haltiger keramischer Formkörper nach einem der Ansprüche 13 bis 15,
**dadurch gekennzeichnet,**
**dass** der poröse β-SiC-haltige keramische Formkörper
60 bis 95 Gew.%, vorzugsweise 60 bis 70 Gew.-%, β-SiC,
0 bis 10 Gew.-%, vorzugsweise 0 bis 5 Gew.-%, Si,
1 bis 30 Gew.-%, vorzugsweise 5 bis 20 Gew.-%, Al, umfasst,
wobei sich die Angaben in Gew.-% jeweils auf das Gesamtgewicht des β-SiC-haltigen Formkörpers beziehen und sich unter Berücksichtigung etwaiger weiterer Komponenten auf 100 Gew.-% addieren.

17. Poröser β-SiC-haltiger keramischer Formkörper nach einem der Ansprüche 13 bis 16,
**dadurch gekennzeichnet,**
**dass** die Aluminiumoxldschicht ferner Titan, eine Titanverbindung und/oder eine Titanlegierung umfasst.

18. Poröser β-SiC-haltiger keramischer Formkörper nach Anspruche 17,
**dadurch gekennzeichnet,**
**dass** der Anteil von Titan 2 bis 20 Gew.-%, bezogen auf die Menge des Aluminiums beträgt.

19. Poröser β-SiC-haltiger keramischer Formkörper nach einem der Ansprüche 13 bis 18,
**dadurch gekennzeichnet,**
**dass** der poröse β-SiC-haltige keramische Formkörper eine Kanäle-haltige Struktur mit einer Kanaldichte von 50 bis 400 Kanälen/inch2 und mit Kanalwänden vorzugsweise mit einer Dicke in einem Bereich von 50 µm bis 480 µm aufweist.

20. Poröser β-SiC-haltiger keramischer Formkörper nach Anspruch 13 bis 19,
**dadurch gekennzeichnet,**
**dass** der β-SiC-haltige Formkörper ein Katalysatorträger und/oder Dieselrußfilter ist.

21. Poröser β-SiC-haltiger keramischer Formkörper nach einem der Ansprüche 13 bis 20,
**dadurch gekennzeichnet,**
**dass** auf der Aluminiumoxidschicht eine Katalysatorschicht angeordnet ist.

22. Katalysatorsystem,
**dadurch gekennzeichnet,**
**dass** es einen porösen β-SiC-haltigen keramischen Formkörper nach einem der Ansprüche 13 bis 21 enthält.

## Claims

1. Method for the production of a porous β-SiC-containing ceramic moulded article having a three-dimensional continuous β-SiC-structure which has substantially no grain boundaries,
**characterised in that**,
the method comprises the following steps:
(a) extrusion of a moulded article from a mass which comprises silicon-containing particles, aluminium-containing particles, carbon-containing particles and a coking, organic binding agent, and
(b) pyrolysation of the porous moulded article provided in step (a) at a temperature of 600 to 1000°C.
(c) siliconisation of the porous moulded article by heating to a temperature in a range from 1100 to 1500°C, obtaining the porous β-SiC-containing moulded article which has an aluminium layer on the surface of the open pores and channels, and
(d) oxidation of the aluminium layer from step (c), obtaining an aluminium oxide layer.

2. Method according to claim 1,
**characterised in that**,
the aluminium-containing particles are platelet-shaped.

3. Method according to claim 2,
**characterised in that**,
the ratio of diameter to thickness of the aluminium platelets is at least 4.

4. Method according to claim 2 or 3,
**characterised in that**,
the platelet-shaped aluminium-containing particles have a thickness in a range from 0.01 to 14µm and an average particle diameter in a range from 0.1 to 70µm.

5. Method according to one of the preceding claims,
**characterised in that**,
the mixture ratio of the mass in step (a) of silicon-containing, aluminium-containing and carbon-containing particles is selected in such a way that no aluminium carbide and/or aluminium silicon carbide is formed.

6. Method according to one of the preceding claims,
**characterised in that**,
the silicon content ranges from 50 to 55 atom percent, with regard to the quantity of silicon and carbon.

7. Method according to one of the preceding claims,
**characterised in that**,
the quantity of aluminium ranges from 1 to 35% by weight with regard to the weight of the pyrolysed article.

8. Method according to one of the preceding claims,
**characterised in that**,
the aluminium-containing particles are covered with a protective layer.

9. Method according to one of the preceding claims,
**characterised in that**,
the moulded article is extruded into a channel-containing structure having a channel density of 50 to 400 channels/inch² and channel walls having a thickness in a range from 50µm to 480µm.

10. Method according to one of the preceding claims,
**characterised in that**,
the mass extruded in step (a) furthermore contains titanium, a titanium compound and/or a titanium alloy.

11. Method according to claim 10,
**characterised in that**,
the proportion of titanium amounts to 2 to 20% by weight with regard to the quantity of aluminium.

12. Method according to one of the preceding claims,
**characterised in that**,
a catalyst layer is applied to the aluminium oxide layer.

13. Porous β-SiC-containing ceramic moulded article,
**characterised in that**,
the porous β-SiC-containing moulded article has a three-dimensional, continuous β-SiC-structure which has substantially no grain boundaries, and
the porous β-SiC-containing ceramic moulded article has pores having an average pore size in the range from 0.1µm to 50µm and an aluminium oxide layer on the surface of the open pores and channels.

14. Porous β-SiC-containing ceramic moulded article according to claim 13,
**characterised in that**,
55% to 70% of the surface of the open pores and channels are covered continuously with the aluminium oxide layer.

15. Porous β-SiC-containing ceramic moulded article according to claim 13 or 14,
**characterised in that**,
the porous β-SiC-containing ceramic moulded body comprises 0 to 10% by weight silicon, with respect to the total weight of the β-SiC-containing moulded article.

16. Porous β-SiC-containing ceramic moulded article according to one of claims 13 to 15,
**characterised in that**,
the porous β-SiC-containing ceramic moulded article comprises
60 to 95% by weight, preferably 60 to 70% by weight, β-SiC,
0 to 10% by weight, preferably 0 to 5% by weight, Si,
1 to 30% by weight, preferably 5 to 20% by weight, Al,
wherein the specifications in % by weight each refer to the total weight of the β-SiC-containing moulded article and add up to 100% by weight, considering any further components.

17. Porous β-SiC-containing ceramic moulded article according to one of claims 13 to 16,
**characterised in that**,
the aluminium oxide later furthermore comprises titanium, a titanium compound and/or a titanium alloy.

18. Porous β-SiC-containing ceramic moulded article according to claim 17,
**characterised in that**,
the proportion of titanium amounts to 2 to 20% by weight with regard to the quantity of aluminium.

19. Porous β-SiC-containing ceramic moulded article according to one of claims 13 to 18,
**characterised in that**,
the porous β-SiC-containing ceramic moulded article has a channel-containing structure having a channel density of 50 to 400 channels/inch² and having channel walls preferably having a thickness in a range from 50µm to 480µm.

20. Porous β-SiC-containing ceramic moulded article according to claims 13 to 19,
characterisedin that,
the β-SiC-containing moulded article is a catalyst support and/or a diesel soot filter.

21. Porous β-SiC-containing ceramic moulded article according to one of claims 13 to 20,
**characterised in that**,
a catalyst layer is arranged on the aluminium oxide layer.

22. Catalyst system,
**characterised in that**,
it contains a porous β-SiC-containing ceramic moulded article according to one of claims 13 to 21.

## Revendications

1. Procédé de fabrication d'un objet moulé céramique poreux contenant du β-SiC, ayant un squelette de β-SiC continu tridimensionnel, qui pour l'essentiel ne possède aucun joint des grains, **caractérisé en ce que** le procédé comprend les étapes suivantes :
(a) extrusion d'un objet moulé à partir d'une masse comprenant des particules contenant du silicium, des particules contenant de l'aluminium, des particules contenant du carbone et un liant organique cokéfiable, et
(b) pyrolyse de l'objet moulé poreux préparé dans l'étape (a) à une température de 600 à 1000°C,
(c) infiltration de silicium dans l'objet moulé poreux par chauffage à une température comprise dans la plage de 1100 à 1500°C, avec conservation de l'objet moulé poreux contenant du β-SiC, qui présente une couche d'aluminium sur la surface des pores ouverts et des canaux, et
(d) oxydation de la couche d'aluminium de l'étape (c) avec conservation d'une couche d'oxyde d'aluminium.

2. Procédé selon la revendication 1, **caractérisé en ce que** les particules contenant de l'aluminium sont lamellaires.

3. Procédé selon la revendication 2, **caractérisé en ce que** le rapport du diamètre à l'épaisseur des lamelles d'aluminium est d'au moins 4.

4. Procédé selon la revendication 2 ou 3, **caractérisé en ce que** les particules lamellaires contenant de l'aluminium présentent une épaisseur comprise dans la plage de 0,01 à 14 µm et une granulométrie moyenne comprise dans la plage de 0,1 à 70 µm.

5. Procédé selon l'une des revendications précédentes, **caractérisé en ce que** le rapport de mélange de la masse dans l'étape (a) de particules contenant du silicium, contenant de l'aluminium et contenant du carbone, est choisi de façon qu'il n'y ait formation ni de carbure d'aluminium, ni de carbure d'aluminium et de silicium, ni des deux.

6. Procédé selon l'une des revendications précédentes, **caractérisé en ce que** la teneur en silicium est comprise dans la plage de 50 à 55 % en atomes par rapport à la quantité de silicium et de carbone.

7. Procédé selon l'une des revendications précédentes, **caractérisé en ce que** la quantité d'aluminium, rapportée au poids de l'objet pyrolysé, est comprise dans la plage de 1 à 35 % en poids.

8. Procédé selon l'une des revendications précédentes, **caractérisé en ce que** les particules contenant de l'aluminium sont revêtues d'une couche de protection.

9. Procédé selon l'une des revendications précédentes, **caractérisé en ce que** l'objet moulé est extrudé pour donner une structure contenant des canaux, ayant une densité de canaux de 50 à 400 canaux/inch² et des parois de canal ayant une épaisseur comprise dans la plage de 50 µm à 480 µm.

10. Procédé selon l'une des revendications précédentes, **caractérisé en ce que** la masse extrudée dans l'étape (a) contient en outre du titane, un composé du titane et/ou un alliage de titane.

11. Procédé selon la revendication 10, **caractérisé en ce que** la proportion du titane est de 2 à 20 % en poids, par rapport à la quantité d'aluminium.

12. Procédé selon l'une des revendications précédentes, **caractérisé en ce qu'**une couche de catalyseur est appliquée sur la couche d'oxyde d'aluminium.

13. Objet moulé céramique poreux contenant du β-SiC, **caractérisé en ce que** l'objet moulé poreux contenant du β-SiC présente un squelette de β-SiC continu tridimensionnel, qui pour l'essentiel ne comprend aucun joint des grains, et que l'objet moulé céramique poreux contenant du β-SiC comprend des pores ayant une grosseur de pore moyenne comprise dans la plage de 0,1 µm à 50 µm et une couche d'oxyde d'aluminium sur la surface des pores ouverts et des canaux.

14. Objet moulé céramique poreux contenant du β-SiC selon la revendication 13, **caractérisé en ce que** 55 à 70 % de la surface des pores ouverts et des canaux sont recouverts en continu de la couche d'oxyde d'aluminium.

15. Objet moulé céramique poreux contenant du β-SiC selon la revendication 13 ou 14, **caractérisé en ce que** l'objet moulé céramique poreux contenant du β-SiC comprend 0 à 10 % en poids de silicium, par rapport au poids total de l'objet moulé contenant du β-SiC.

16. Objet moulé céramique poreux contenant du β-SiC selon l'une des revendications 13 à 15,
**caractérisé en ce que**
l'objet moulé céramique poreux contenant du β-SiC comprend 60 à 95 % en poids, de préférence 60 à 70 % en poids de β-SiC ; 0 à 10 % en poids, de préférence 0 à 5 % en poids de Si ; 1 à 30 % en poids, de préférence 5 à 20 % en poids, d'Al,
les indications de pourcentage en poids étant rapportées chacune au poids total de l'objet moulé contenant du β-SiC et, si l'on prend compte les éventuels autres composants, leur somme étant égale à 100 % en poids.

17. Objet moulé céramique poreux contenant du β-SiC selon l'une des revendications 13 à 16, **caractérisé en ce que** la couche d'oxyde d'aluminium contient en outre du titane, un composé du titane et/ou un alliage de titane.

18. Objet moulé céramique poreux contenant du β-SiC selon la revendication 17, **caractérisé en ce que** la proportion de titane est de 2 à 20 % en poids, par rapport à la quantité d'aluminium.

19. Objet moulé céramique poreux contenant du β-SiC selon l'une des revendications 13 à 18, **caractérisé en ce que** l'objet moulé céramique poreux contenant du SiC présente une structure contenant des canaux, ayant une densité de canaux de 50 à 400 canaux/inch², et des parois de canal ayant de préférence une épaisseur comprise dans la plage de 50 µm à 480 µm.

20. Objet moulé céramique poreux contenant du β-SiC selon les revendications 13 à 19, **caractérisé en ce que** l'objet moulé contenant du β-SiC est un support de catalyseur et/ou un filtre à suies diesel.

21. Objet moulé céramique poreux contenant du β-SiC selon l'une des revendications 13 à 20, **caractérisé en ce qu'**une couche de catalyseur est disposée sur la couche d'oxyde d'aluminium.

22. Système catalyseur, **caractérisé en ce qu'**il contient un objet moulé céramique poreux contenant du β-SiC selon l'une des revendications 13 à 21.
